# EUROPÄISCHE PATENTSCHRIFT

(11) **EP 2 886 433 B1**
(45) Veröffentlichungstag und Bekanntmachung des Hinweises auf die Patenterteilung: **16.11.2016**
(21) Anmeldenummer: 14199968.0
(22) Anmeldetag: 23.12.2014
(51) Int. Cl.: B62K 25/04, F16F 9/18, F16F 9/46, F16F 9/53

(54) **Fahrwerksteuerung für ein Zweirad und Verfahren**
Chassis control for a bicycle and method
Commande de châssis pour un deux-roues et procédé

(30) Priorität: 23.12.2013 DE 102013021892
(43) Veröffentlichungstag der Anmeldung: 24.06.2015
(73) Patentinhaber: DT Swiss AG, 2504 Biel (CH)
(72) Erfinder: Walthert, Martin, 3270 Aarberg (CH); Wendel, Valentin, 2504 Biel (CH); Battlogg, Stefan, 6771 St. Anton i.M. (AT); Elsensohn, Gernot, 6771 St. Anton i. M. (AT); Pösel, Jürgen, 6700 Bludenz (AT)
(74) Vertreter: BSB Intellectual Property Law

(56) Entgegenhaltungen:
- EP-A1- 1 394 439
- EP-A2- 1 818 250
- DE-A1-102010 055 828
- DE-A1-102011 009 405

## Beschreibung

Die vorliegende Erfindung betrifft eine Fahrwerksteuerung für ein wenigstens teilweise muskelbetriebenes Zweirad und insbesondere ein Fahrrad sowie ein Verfahren zur Steuerung. Dabei umfasst das Fahrwerk wenigstens eine Dämpfereinrichtung, um auf das Fahrwerk einwirkende Stöße zu dämpfen. Ein mit solch einer Fahrwerksteuerung ausgerüstetes Zweirad kann mit einem Hilfsantrieb und insbesondere einem elektrischen Hilfsantrieb ausgerüstet sein.

Im Stand der Technik sind verschiedenste Hinterraddämpfer und Federgabeln für Fahrräder bekannt geworden. Typischerweise umfasst ein Stoßdämpfer eine Federeinheit, um auftretende Stöße abzufedern und eine Dämpfungseinheit, um die Federschwingung zu dämpfen. Bei als Hinterradstoßdämpfern ausgeführten Dämpfereinrichtungen werden die Federeinheit und die Dämpfungseinheit in der Regel als integrale Einheit ausgebildet. Bei als Federgabeln ausgebildeten Dämpfereinrichtungen können die Dämpfungseinheit und die Federeinheit auch separat angeordnet werden.

Dämpfer für Fahrräder werden zumeist mit Öl als Dämpfungsfluid betrieben. Zur Dämpfung wird das Dämpfungsfluid von einer ersten Dämpfungskammer über eine Blende gedrosselt zu einer zweiten Dämpfungskammer geleitet. Die Größe der Öffnung der Blende bestimmt die Stärke der Dämpfung. Die optimale Dämpfung hängt von verschiedenen Faktoren ab, wie beispielsweise dem Gewicht des Fahrers und insbesondere den Eigenschaften des Geländes. Es ist wünschenswert, die Stärke der Dämpfung last- und geschwindigkeitsabhängig einzustellen, sodass kleine Stöße weniger stark gedämpft werden als starke Stöße. Bei Fahrten über eine Straße, über einen Waldweg oder direkt durch das Gelände sind deshalb unterschiedliche Dämpfungseinstellungen optimal.

Zur Einstellung und Beeinflussung der Dämpfung sind magnetorheologische Fluide bekannt geworden, deren Eigenschaften durch Anlegen eines entsprechenden magnetischen Feldes beeinflusst werden können.

Magnetorheologische Fluide bestehen meistens aus einer Suspension von kleinen, magnetisch polarisierbaren Partikeln, welche in einer Trägerflüssigkeit wie einem Öl fein verteilt sind. Die meist aus Carbonyleisenpulver bestehenden polarisierbaren Partikel weisen typischerweise Durchmesser zwischen etwa 0,1 und 50 Mikrometern auf und bilden unter Einfluss eines magnetischen Feldes kettenartige Strukturen, die eine vom Feld abhängige Schubspannung aufnehmen können. Dadurch kann, ähnlich wie durch eine Viskositätsänderung, der Strömungswiderstand eines Ventils verändert werden. Der Vorgang ist schnell und reversibel, sodass sich bei Abschaltung des Magnetfelds der rheologische Ausgangszustand wieder einstellt. Somit eignen sich magnetorheologische Fluide zum Einsatz an Dämpfern von Fahrrädern.

Ein solcher Dämpfer ist mit der DE 10 2011 009 405 A1 bekannt geworden. Bei diesem bekannten Stoßdämpfer für Fahrräder wird ein magnetorheologisches Fluid als Dämpfungsfluid eingesetzt. Zur Dämpfung wird das Dämpfungsventil mit dem Dämpfungskanal einem Magnetfeld einer gewünschten Stärke ausgesetzt, um die eingestellte Dämpfung zu erzielen. An dem Fahrrad ist eine wechselbare Elektronikeinheit vorgesehen, sodass ein Anfänger/Erstanwender eine Elektronikeinheit mit wenig oder gar keinen Einstellmöglichkeiten verwenden kann, während der erfahrene Benutzer oder Experte die Elektronikeinheit austauscht und ein Modell mit mehr Einstellmöglichkeiten wählt.

Dieser bekannte Dämpfer ermöglicht gerade auch durch die wechselbaren Elektronikeinheiten eine Vielzahl von Einstellmöglichkeiten für den magnetorheologischen Dämpfer, sodass der Dämpfer an unterschiedliche Bedingungen anpassbar ist. Allerdings weist der Stoßdämpfer eine bestimmte und an sich unveränderbare Grunddämpfung oder Mindestdämpfung auf, die sich durch seine Konstruktion ergibt und die auch bei abgeschaltetem magnetorheologischen Dämpfer wirkt, wenn das Dämpfungsventil keinem Magnetfeld ausgesetzt wird. Die Grunddämpfung und die sich dadurch ergebende maximale Einfeder- und Ausfedergeschwindigkeit kann im Betrieb nicht verändert werden.

Es ist deshalb die Aufgabe der vorliegenden Erfindung, eine Fahrwerksteuerung und ein entsprechendes Zweirad sowie ein Verfahren zur Steuerung zur Verfügung zu stellen, womit eine noch bessere Steuerung und Anpassung ermöglicht werden. Insbesondere können auch schnellere Ein- und Ausfederbewegungen ermöglicht werden.

Diese Aufgabe wird durch eine Fahrwerksteuerung mit den Merkmalen des Anspruchs 1, sowie durch ein Fahrrad mit den Merkmalen von Anspruch 12 und durch ein Verfahren nach Anspruch 13 gelöst. Bevorzugte Weiterbildungen der Erfindung sind Gegenstand der Unteransprüche. Weitere Vorteile und Merkmale ergeben sich durch die allgemeine Beschreibung und durch die Beschreibung der Ausführungsbeispiele.

Eine erfindungsgemäße Fahrwerksteuerung für ein wenigstens teilweise muskelbetriebenes Zweirad und insbesondere Fahrrad weist wenigstens eine Dämpfereinrichtung und wenigstens eine Federeinrichtung zur gefederten Dämpfung einer Relativbewegung zwischen einer ersten und einer zweiten Komponente auf. Die Federeinrichtung umfasst wenigstens eine Federeinheit mit einer Federeigenschaft, wobei die Federeinheit wenigstens eine mit einem kompressiblen Fluid versehene Fluidfeder umfasst, wobei die Fluidfeder eine mit dem kompressiblen Fluid versehene Positivkammer und eine mit dem kompressiblen Fluid versehene Negativkammer aufweist. Insbesondere wird die Positivkammer durch einen Federungskolben begrenzt. Die Dämpfereinrichtung weist wenigstens eine Dämpfungseigenschaft auf. Die oder wenigstens eine Federeigenschaft der Federeinheit ist über wenigstens einen elektrisch betätigbaren Aktor veränderbar. Der Aktor ist über wenigstens eine elektrische Steuereinrichtung steuerbar. Es ist wenigstens eine einstellbare Ausgleichseinrichtung vorgesehen, mit welcher von der Steuereinrichtung gesteuert an einer einstellbaren Position über die Ausgleichseinrichtung ein Fluidaustausch zwischen der Negativkammer und der Positivkammer herstellbar ist.

Die erfindungsgemäße Fahrwerksteuerung hat viele Vorteile. Ein erheblicher Vorteil der erfindungsgemäßen Fahrwerksteuerung besteht darin, dass nicht nur die Dämpfungseigenschaften der Dämpfereinrichtung veränderbar sind, sondern es kann auch die oder wenigstens eine Federeigenschaft der Federeinheit und somit der Federeinrichtung insgesamt im Betrieb gesteuert verändert werden. Insbesondere können die Federeigenschaft wenigstens einer Federeinheit und eine Dämpfungseigenschaft der Dämpfereinrichtung gekoppelt veränderbar sein. Dabei ist es möglich, dass ein oder zwei oder mehr Federeinheiten bzw. deren Federeigenschaft oder Federcharakteristika veränderbar sind. Vorzugsweise ist die Dämpfereinrichtung mit wenigstens einem magnetorheologischen Fluid versehen und weist wenigstens ein einstellbares magnetorheologisches Dämpfungsventil auf. Es ist auch möglich, dass zwei oder mehr magnetorheologische und/oder konventionelle Dämpfungsventile vorgesehen sind, wobei vorzugsweise wenigstens ein magnetorheologisches und/oder konventionelles Dämpfungsventil mit der Steuereinrichtung im Betrieb einstellbar ist.

Die Ausgleichseinrichtung erlaubt an einer einstellbaren und somit veränderbaren Position einen Fluidaustausch zwischen der Negativkammer und der Positivkammer. Dadurch können die Druckverhältnisse automatisch verändert und an den aktuellen Bedarf angepasst werden. Eine Federeigenschaft oder mehrere Federeigenschaften können verändert werden.

Unter einer veränderbaren Federeigenschaft wird insbesondere eine Position der Federeinheit oder eines Teiles der Federeinheit oder ein Absenken der Federgabel oder eine Einstellung der Federhärte, des Volumens der Federeinheit oder des Volumens eines Teiles der Federeinheit, oder eines Druckes der Federeinheit oder eines Teiles der Federeinheit, oder ein Federweg verstanden.

Die erfindungsgemäße Fahrwerksteuerung ermöglicht während des Betriebs und sogar während der Fahrt auf einfache und energiesparende Weise eine Veränderung der Federeigenschaften für wenigstens ein Rad eines Fahrrads. Durch die einstellbare Federcharakteristik kann die Einfedergeschwindigkeit und die Ausfedergeschwindigkeit bei gleichbleibender Dämpfung erhöht oder erniedrigt werden. Dadurch ermöglichen sich mehr und auch komplexere Einflussmöglichkeiten auf die Fahrwerksteuerung. Vorzugsweise ist auch eine Einstellung der Dämpfungseigenschaften des wenigstens einen magnetorheologischen Dämpfungsventils möglich.

In einer einfachen und anderen Ausgestaltung ist eine erfindungsgemäße Fahrwerksteuerung für ein wenigstens teilweise muskelbetriebenes Zweirad und insbesondere Fahrrad vorgesehen und weist insbesondere eine Dämpfereinrichtung und wenigstens eine Federeinrichtung zur gefederten Dämpfung einer Relativbewegung zwischen einer ersten und einer zweiten Komponente auf. Die Federeinrichtung umfasst wenigstens eine Federeinheit mit einer Federeigenschaft und die Dämpfereinrichtung weist wenigstens eine Dämpfungseigenschaft auf. Die Federeigenschaft der Federeinheit ist über wenigstens einen elektrisch betätigbaren Aktor veränderbar. Der Aktor ist über wenigstens eine elektrische Steuereinrichtung steuerbar. Vorzugsweise ist wenigstens eine Dämpfungseigenschaft über die elektrische Steuereinrichtung steuerbar.

In allen Ausgestaltungen umfasst der elektrisch betätigbare Aktor vorzugsweise wenigstens ein Steuerventil oder ist als ein solches ausgebildet. Vorzugsweise umfasst der elektrisch betätigbare Aktor wenigstens eine Verstelleinrichtung oder ist als eine solche ausgebildet.

Vorzugsweise umfasst die Federeinheit wenigstens eine mit einem kompressiblen Fluid versehene Fluidfeder. Insbesondere ist die Federkraft der Fluidfeder veränderbar.

Vorzugsweise weist die Fluidfeder eine mit dem kompressiblen Fluid versehene Positivkammer und eine mit dem kompressiblen Fluid versehene Negativkammer auf. Die Positivkammer wird insbesondere durch einen Federungskolben begrenzt.

In vorteilhaften Ausgestaltungen ist eine Ausgleichseinrichtung vorgesehen. Die Ausgleichseinrichtung ist insbesondere einstellbar. Die Ausgleichseinrichtung umfasst vorzugsweise wenigstens einen Aktor oder auch zwei oder mehr Aktoren. Mit der Steuereinrichtung ist über die Ausgleichseinrichtung ein Fluidaustausch und insbesondere ein vorzugsweise vollständiger Druckausgleich zwischen der Negativkammer und der Positivkammer gesteuert herstellbar.

Vorzugsweise ist an wenigstens zwei verschiedenen axialen Positionen des Federungskolbens der Fluidaustausch zwischen der Negativkammer und der Positivkammer gesteuert herstellbar. In vorteilhaften Weiterbildungen ist der Fluidaustausch an einer Mehrzahl oder Vielzahl von Positionen und in bestimmten Weiterbildungen an beliebigen axialen Positionen des Federungskolbens möglich.

Ist bei einer vorgegebenen Dämpfung die Ausfedergeschwindigkeit zu gering, sodass sich eine mangelhafte Traktion auf einer gegebenen Fahrstrecke ergibt, so kann durch eine Erhöhung der Federstärke der Federeinheit die Ausfedergeschwindigkeit erhöht werden, sodass eine bessere Traktion und somit Haftung am Boden erfolgt, was auch die Sicherheit des Betrieb des Zweirades erhöht.

Der elektrisch betätigbare Aktor oder wenigstens einer der elektrisch betätigbaren Aktoren kann eine Lage des Stoßdämpfers oder der Federeinheit beeinflussen. Ein Aktor verändert insbesondere die Federkraft der Federeinheit. Dabei ist die Federkraft der Federeinheit mittels der Steuereinrichtung elektrisch gesteuert veränderbar.

In bevorzugten Weiterbildungen weist die Fluidfeder eine mit dem kompressiblen Fluid versehene Positivkammer und eine mit dem kompressiblen Fluid versehene Negativkammer auf. Eine Fluidfeder, die eine Positivkammer und eine Negativkammer umfasst, ermöglicht eine feine Steuerung der Federungseigenschaften, da durch die Auswahl der Volumina der Positivkammer und der Negativkammer sowie der Querschnittsgestaltung der Positivkammer und der Negativkammer unterschiedliche Verläufe und Steilheiten der Federeigenschaften und der Federcharakteristik der Fluidfeder insgesamt ermöglicht werden.

In besonders vorteilhaften Ausgestaltungen ist das Fluidvolumen bzw. das aktive Fluidvolumen der Positivkammer mittels des elektrisch betätigbaren Aktors veränderbar. Vorzugsweise ist das Fluidvolumen bzw. das aktive Fluidvolumen der Negativkammer elektrisch gesteuert mittels des elektrisch betätigbaren Aktors veränderbar.

Dabei ist es in vorteilhaften Weiterbildungen bevorzugt, dass die Positivkammer der Fluidfeder wenigstens zwei Teilkammern aufweist, welche über ein elektrisch steuerbares Steuerventil miteinander verbindbar und voneinander trennbar sind. Es ist auch bevorzugt, dass die Negativkammer der Fluidfeder wenigstens zwei Teilkammern aufweist, welche über ein elektrisch steuerbares Steuerventil miteinander verbindbar und voneinander trennbar sind. Besonders bevorzugt weist die Positivkammer wenigstens zwei Teilkammern auf und es weist die Negativkammer wenigstens zwei Teilkammern auf, die jeweils über wenigstens ein elektrisch steuerbares Steuerventil voneinander trennbar und miteinander verbindbar sind. Ein elektrisch steuerbares Steuerventil dient dabei als elektrisch betätigbarer Aktor, sodass über den als Steuerventil ausgeführten elektrisch betätigbaren Aktor die Teilkammern der Positivkammer und/oder der Negativkammern jeweils miteinander verbindbar und voneinander trennbar sind. Dadurch kann über das elektrisch steuerbare Steuerventil das aktive Volumen der Positivkammer verkleinert oder vergrößert werden. In entsprechender Weise kann das aktive Volumen der Negativkammer vergrößert oder verkleinert werden.

Als kompressibles Fluid wird für die Fluidfeder in allen Fällen insbesondere ein Gas und vorzugsweise Luft verwendet. Wird bei konstantem Druck innerhalb beispielsweise der zwei Teilkammern der Positivkammer das Steuerventil zwischen den beiden Teilkammern der Positivkammer geöffnet, so werden beide Teilkammern der Positivkammer miteinander verbunden und wirken gemeinsam. Dadurch wird die Positivfeder weicher, da das aktive Volumen der Positivfeder zugenommen hat. In entsprechender Weise wird die Federcharakteristik der Negativfeder der Fluidfeder verändert, wenn die zwei Teilkammern der Negativfeder bzw. der Negativkammer miteinander verbunden werden.

Ein erheblicher Vorteil der Verwendung mehrerer Teilkammern für die Positivkammer und/oder die Negativkammer der Fluidfeder liegt darin, dass die Steuerventile zur Verbindung bzw. zur Trennung der jeweiligen Teilkammern nur wenig elektrische Energie benötigen. Somit ist auch der Einsatz bei muskelkraftbetriebenen Fahrrädern möglich, bei denen aus Gewichts- und Energiegründen nicht einfach ein Kompressor eingesetzt werden kann, um das Druckniveau in der Positivkammer und/oder der Negativkammer im Betrieb zu erhöhen oder abzusenken. Die Kompression von Gas ist energieintensiv. Der Einsatz eines Kompressors eignet sich in der Regel nicht für Fahrräder.

In bevorzugten Ausgestaltungen ist die Negativkammer der Fluidfeder mit der Positivkammer der Fluidfeder über eine Ausgleichseinrichtung verbindbar. Insbesondere die Position einstellbar oder wählbar, an der die Negativkammer der Fluidfeder mit der Positivkammer der Fluidfeder verbindbar ist. Das bedeutet, dass in wenigstens einer Position ein Druckausgleich zwischen der Positivkammer der Fluidfeder und der Negativkammer der Fluidfeder erfolgt bzw. erfolgen kann. Damit wird sichergestellt, dass sich im laufenden Betrieb auch dauerhaft die Kraftverhältnisse nicht unzulässig verschieben. Durch die einstellbare Ausgleichseinrichtung ist es möglich, das Druckverhältnis und somit die Federcharakteristik der Fluidfeder zu beeinflussen. Je nachdem bei welchem Volumen der Negativkammer und bei welchem Volumen der Positivkammer ein Druckausgleich zwischen der Positivkammer und der Negativkammer erfolgt, wird die Federkraft beim weiteren Einfedern oder Ausfedern entsprechend beeinflusst. Dadurch kann der Kraftverlauf der Fluidfeder über den Federweg entsprechend verändert werden. Wird die Ausgleichseinrichtung so eingestellt, dass schon bei einem relativ geringen Federweg ein Druckausgleich zwischen der Positivkammer und der Negativkammer erfolgt, so wird ein leichteres Einfedern ermöglicht und umgekehrt.

Dabei kann eine mechanische Einstellung der Position der einstellbaren Ausgleichseinrichtung einfach und mit geringem Energieeinsatz erfolgen.

In allen Ausgestaltungen ist es bevorzugt, dass ein Federungskolben die Negativkammer und die Positivkammer voneinander trennt. Die einstellbare Ausgleichseinrichtung kann vorzugsweise an einer einstellbaren Position die Negativkammer mit der Positivkammer verbinden. Es ist möglich, dass mit einem Steuerventil in Form von z. B. einem steuerbaren Ausgleichsventil durch die Steuereinrichtung gesteuert eine Verbindung der Negativkammer mit der Positivkammer herstellbar ist. In einfachen Fällen ist ein Steuerventil in dem Federungskolben vorgesehen. Möglich ist es auch, dass ein Steuerventil extern angeordnet ist und bei Bedarf eine Verbindung für einen Fluidaustausch der Negativkammer mit der Positivkammer herstellt. Es ist möglich, dass ein solches intern oder extern angeordnetes Steuerventil an beliebigen Positionen einen Fluidaustausch der Negativkammer mit der Positivkammer erlaubt.

In einer bevorzugten Weiterbildung sind die Positivkammer und die Negativkammer über wenigstens eine Ausgleichsleitung und mehrere an unterschiedlichen Positionen vorgesehene schaltbare Steuerventile als elektrisch betätigbare Aktoren verbindbar, um an einer einstellbaren und wählbaren Position einen Druckausgleich zwischen der Positivkammer und der Negativkammer einzustellen.

In anderen Ausgestaltungen ist es möglich, dass eine Länge und/oder eine Position der Ausgleichseinrichtung einstellbar ist. In einfachen Ausgestaltungen ist es möglich, dass die Ausgleichseinrichtung einen Ausgleichsstößel oder dergleichen aufweist, wobei der Ausgleichsstößel bei einer einstellbaren Federposition ein Ventil in dem Federungskolben oder ein sonstiges Ventil öffnet, sodass ein Druckausgleich zwischen der Negativkammer und der Positivkammer ermöglicht wird.

In besonders einfachen Ausgestaltungen ist der Ausgleichsstößel an dem Federungskolben vorgesehen und öffnet mechanisch ein Ausgleichsventil in dem Federungskolben, wenn der Ausgleichsstößel einen Anschlag erreicht.

Zur Einstellung der Position der Ausgleichseinrichtung ist es beispielsweise möglich, die Länge des Ausgleichsstößels zu verändern. Es ist auch möglich, dass der Anschlag einstellbar ist, mit dem der Ausgleichsstößel zusammenwirkt. Beispielsweise kann die Länge der Ausgleichsstößel und/oder die Position des Anschlags elektrisch verstellbar sein.

Eine solche Einstellung der Ausgleichseinrichtung kann beispielsweise über einen einfachen Elektromotor oder eine sonstige elektrische oder magnetische Stelleinrichtung erfolgen, wobei nur ein sehr geringer Energieeinsatz benötigt wird. Die eingesetzte Energie wird nur zur mechanischen Verstellung der Länge der Ausgleichseinrichtung und/oder der Position eines Anschlags benötigt. Bei der Verstellung muss gegen keinen Gegendruck angearbeitet werden, sodass der Verstellvorgang leicht, schnell und energiearm erfolgen kann.

Möglich ist es auch, dass ein schaltbares Ausgleichsventil vorgesehen ist, welches eine Strömungsverbindung zwischen der Positivkammer und der Negativkammer bei Erreichen einer vorbestimmten Position ermöglicht oder unterbindet.

In bevorzugten Ausgestaltungen ist eine Sensoreinrichtung zur Ermittlung einer Relativposition der ersten und der zweiten Komponenten zueinander vorgesehen. Vorzugsweise ist die Steuereinrichtung dazu eingerichtet und ausgebildet, einen Fluiddruck des kompressiblen Fluids in der Positiv- und/oder Negativkammer durch gezieltes Öffnen und Schließen wenigstens eines Steuerventils einzustellen. Zur Steuerung können Signale der Sensoreinrichtung verwendet werden. Eine solche Ausgestaltung ist sehr vorteilhaft, da kein Kompressor zur Erhöhung des Fluiddrucks benötigt wird, sondern die Einstellung des Fluiddrucks über ein intelligentes Steuern eines Steuerventils erfolgt. Beispielsweise kann eine solche Steuerung dadurch erfolgen, dass ein Steuerventil zwischen zwei Teilkammern der Positivkammer bei maximaler Einfederung oder Ausfederung geöffnet bzw. geschlossen wird. Dadurch können die sich in der aktiven Positivkammer befindende Luftmenge und das aktiv wirkende Luftvolumen beeinflusst werden, sodass unterschiedliche Federcharakteristika der Positivkammer einstellbar sind, ohne z. B. einen energieintensiven Kompressor zu benötigen.

Die Steuerung des Steuerventils kann während des normalen Fahrbetriebs erfolgen, sodass bei einem entsprechenden Einfeder-oder Ausfedervorgang die auftretenden Stöße genutzt werden können, um das Druckniveau in der Positivkammer entsprechend einzustellen. In analogerweise kann ebenfalls das Druckniveau in der Negativkammer gezielt beeinflusst werden. Die Steuerung des Steuerventils zwischen den beiden Teilkammern der Positivkammer und/oder die Steuerung des Steuerventils zwischen den zwei Teilkammern der Negativkammer kann nicht nur bei vollständigem Einfedern oder Ausfedern erfolgen, sondern auch in beliebigen Zwischenstellungen. Durch das Ausnutzen der Stoßenergie beim Fahren und durch gezieltes Öffnen und Schließen der Steuerventile kann so die Charakteristik der Fahrwerksteuerung insgesamt und die Federcharakteristik der Fluidfeder erheblich beeinflusst werden.

In einer vorteilhaften Weiterbildung ist wenigstens eine Speichereinrichtung vorgesehen. Mit der Steuereinrichtung und der Speichereinrichtung ist wenigstens eine Dämpferkennlinie definiert, welche einen Verlauf der Dämpfungskraft über eine Relativgeschwindigkeit zwischen der ersten und der zweiten Komponente definiert. Es ist wenigstens eine Sensoreinrichtung vorgesehen und die Steuereinrichtung und die Sensoreinrichtung sind dazu ausgebildet und eingerichtet, wenigstens einen aktuellen Kennwert für die aktuelle Relativgeschwindigkeit der ersten und der zweiten Komponente zueinander periodisch zu ermitteln. Die Steuereinrichtung ist dazu eingerichtet und ausgebildet, mit dem aktuellen Kennwert aus der in der Speichereinrichtung gespeicherten Dämpferkennlinie eine zugehörige aktuelle Einstellung für das steuerbare Dämpfungsventil abzuleiten und an dem Dämpfungsventil einzustellen, um eine aktuelle Dämpfungskraft einzustellen, die sich aus der (aktuell eingestellten) Dämpferkennlinie bei dem ermittelten aktuellen Kennwert ergibt.

In bevorzugten Weiterbildungen ist der Nulldurchgang der Dämpferkennlinie verschiebbar.

Vorzugsweise ist eine veränderte Dämpferkennlinie innerhalb von weniger als 1 Minute und insbesondere innerhalb von weniger als 1 Sekunde eingestellt und/oder in der Speichereinrichtung hinterlegt und/oder aus der Speichereinrichtung abgerufen.

Vorzugsweise ist die Dämpfereinrichtung mit wenigstens einem magnetorheologischen Fluid versehen und umfasst wenigstens ein magnetorheologisches Dämpfungsventil. Das Dämpfungsventil weist wenigstens eine mit der Steuereinrichtung einstellbare Dämpfungseigenschaft auf, sodass sowohl die Dämpfungseigenschaft des Dämpfungsventils als auch die Federeigenschaft der Federeinheit über die elektrische Steuereinrichtung veränderbar sind.

In bevorzugten Weiterbildungen ist die Steuereinrichtung geeignet und ausgebildet, eine Dämpferkennlinie einzustellen, bei welcher bei einer höheren Relativgeschwindigkeit eine geringere Dämpfungskraft eingestellt wird als bei einer geringeren Relativgeschwindigkeit. Vorzugsweise ist eine Bedieneinrichtung vorgesehen, welche insbesondere dazu geeignet und ausgebildet ist, eine Dämpferkennlinie einzustellen, bei welcher die Ausfederdämpfung unabhängig von der Einfederdämpfung eingestellt wird. In vorteilhaften Weiterbildungen und Ausgestaltungen der Erfindung ist der Dämpfereinrichtung eine elektrische Spuleneinrichtung als Felderzeugungseinrichtung zugeordnet. Eine Stromstärke der elektrischen Spuleneinrichtung wird in Perioden neu eingestellt, wobei wenigstens einige Perioden kürzer als 1 Sekunde oder kürzer als 50 Millisekunden sind. In besonders bevorzugten Weiterbildungen wird die Stromstärke der elektrischen Spuleneinrichtung in Perioden kürzer als 50 oder sogar 20 Millisekunden eingestellt.

Ein erfindungsgemäßes Zweirad umfasst eine Trageinrichtung umfassend einen Rahmen, eine Lenkeinrichtung und zwei Radaufnahmen an der Trageinrichtung. An der Trageinrichtung sind zwei Räder aufgenommen. Es ist wenigstens eine Fahrwerksteuerung vorgesehen, um eine Relativbewegung wenigstens eines der Räder und insbesondere beider Räder gegenüber der Trageinrichtung zu federn und zu dämpfen. Die Fahrwerksteuerung umfasst wenigstens eine mit wenigstens einem magnetorheologischen Fluid versehene Dämpfereinrichtung und wenigstens eine Federeinrichtung zur gefederten Dämpfung einer Relativbewegung des Rades relativ zu der Trageinrichtung.

Die Dämpfereinrichtung umfasst wenigstens ein einstellbares magnetorheologisches Dämpfungsventil. Die Federcharakteristik der Federeinheit ist über wenigstens einen elektrisch betätigbaren Aktor veränderbar. Der Aktor ist über wenigstens eine elektrische Steuereinrichtung steuerbar, sodass die Dämpfung des Dämpfungsventils und auch die Federcharakteristik der Federeinheit über die elektrische Steuereinrichtung veränderbar sind.

Das erfindungsgemäße Verfahren dient zum Steuern eines Fahrwerks eines wenigstens teilweise muskelbetriebenen Zweirads mit wenigstens einer insbesondere steuerbaren Dämpfereinrichtung und mit wenigstens einer Federeinrichtung zur gefederten Dämpfung einer Relativbewegung zwischen einer ersten und einer zweiten Komponente. Dabei umfasst die Federeinrichtung wenigstens eine Federeinheit mit einer Federeigenschaft. Die Federeinheit federt über wenigstens eine mit einem kompressiblen Fluid versehene Fluidfeder, wobei die Federung der Fluidfeder über eine mit dem kompressiblen Fluid versehene Positivkammer und eine mit dem kompressiblen Fluid versehene Negativkammer erfolgt. Die Dämpfereinrichtung weist wenigstens ein Dämpfungseigenschaft auf und dämpft eine Relativbewegung. Die Federeigenschaft der Federeinheit wird über wenigstens einen elektrisch betätigbaren Aktor verändert und der Aktor wird über wenigstens eine elektrische Steuereinrichtung gesteuert. Dabei stellt die Steuereinrichtung mit einer einstellbaren Ausgleichseinrichtung an einer einstellbaren Position über die Ausgleichseinrichtung einen Fluidaustausch zwischen der Negativkammer und der Positivkammer gesteuert her.

Auch das erfindungsgemäße Verfahren hat viele Vorteile. Ein erheblicher Vorteil ist die elektrische Steuerung der Federeigenschaft der Federeinheit. Vorzugsweise wird auch die Dämpfungseigenschaft der Dämpfereinrichtung mit der elektrischen Steuereinrichtung gesteuert.

In einer einfachen und anderen Ausgestaltung eines erfindungsgemäßen Verfahrens dient das Verfahren zum Steuern eines Fahrwerks eines wenigstens teilweise muskelbetriebenen Zweirads und insbesondere Fahrrads mit wenigstens einer insbesondere steuerbaren Dämpfereinrichtung und mit wenigstens einer Federeinrichtung zur gefederten Dämpfung einer Relativbewegung zwischen einer ersten und einer zweiten Komponente. Dabei umfasst die Federeinrichtung wenigstens eine Federeinheit mit einer Federeigenschaft und die Dämpfereinrichtung weist wenigstens eine Dämpfungseigenschaft auf. Dabei wird die oder wenigstens eine Federeigenschaft der Federeinheit oder die Federcharakteristik der Federeinheit insgesamt über wenigstens einen elektrisch betätigbaren Aktor verändert. Der Aktor wird über wenigstens eine elektrische Steuereinrichtung gesteuert.

In allen Ausgestaltungen umfasst die Federeinheit vorzugsweise eine Fluidfeder mit einer Positivkammer und/oder Negativkammer. Dabei ist es möglich, dass zwei Teilkammern der Positivkammer gesteuert miteinander verbunden und voneinander getrennt werden. Ebenso ist es möglich, dass zwei Teilkammern der Negativkammer gesteuert miteinander verbunden und voneinander getrennt werden, um die Federkraft der Positivfeder und/oder der Negativfeder einzustellen. Insgesamt bilden die Positivfeder und die Negativfeder die Fluidfeder. Möglich ist es aber auch, dass die Fluidfeder nur aus einer Positivfeder oder nur aus einer Negativfeder besteht.

In bevorzugten Ausgestaltungen werden die Teilkammern der Positivkammer im eingefederten Zustand voneinander getrennt, um eine geänderte und vorzugsweise höhere Kraft der Positivkammer zur Verfügung zu stellen. Ebenso ist es bevorzugt, dass die Teilkammern der Positivkammern im ausgefederten Zustand voneinander getrennt werden, um eine geänderte und vorzugsweise geringere Federkraft der Positivkammer zur Verfügung zu stellen. Durch ein solches Verfahren können bei zwei oder mehr Teilkammern auf einfache Art und Weise der Betrieb des Zweirads und die darauf auswirkenden Stöße ausgenutzt werden, um den wirksamen Druck in der Positivkammer zu erhöhen und/oder zu erniedrigen.

In entsprechender Weise können die Teilkammern der Negativkammern im ausgefederten Zustand voneinander getrennt werden, um eine höhere Federkraft der Negativkammer zur Verfügung zu stellen und es können die Teilkammern der Negativkammer im eingefederten Zustand voneinander getrennt werden, um eine geringere Federkraft der Negativkammer zur Verfügung zu stellen.

Möglich und bevorzugt ist es auch, dass ein Druckausgleich der Positivkammer und der Negativkammer an einer einstellbaren Position erfolgt. Zur Einstellung der Position des Druckausgleichs wird insbesondere eine Länge der Ausgleichseinrichtung oder ein Anschlag, der mit der Ausgleichseinrichtung zusammenwirkt oder dazugehört, positionsverändert. Oder es wird mit der Steuereinrichtung gesteuert ein Steuerventil oder Ausgleichsventil an einer einstellbaren oder frei wählbaren oder auch beliebigen Position geöffnet, um einen Druckausgleich zwischen der Positivkammer und der Negativkammer zu bewirken.

Weitere Vorteile und Eigenschaften der vorliegenden Erfindung ergeben sich auf dem Ausführungsbeispiel, das mit Bezug auf die beiliegenden Figuren im Folgenden beschrieben wird.

In den Figuren zeigen:
- Fig. 1: eine schematische Ansicht eines mit einem erfindungsgemäßen Stoßdämpfer ausgerüsteten Fahrrads;
- Fig. 2: eine schematische Ansicht der Steuerungsstruktur des Fahrrads nach Fig. 1;
- Fig. 3a: eine schematische Ansicht einer Federgabel des Fahrrads nach Fig. 1;

- Fig. 3b: eine schematische geschnittene Ansicht eines Stoßdämpfers des Fahrrads nach Fig. 1;
- Fig. 3c: eine stark schematische geschnittene Ansicht eines Details des Stoßdämpfers des Fahrrads nach Fig. 1;
- Fig. 4: eine geschnittene Seitenansicht des Stoßdämpfers nach Fig. 3b in einer vergrößerten Darstellung in der Druckstufe;
- Fig. 5: eine geschnittene vergrößerte Darstellung des Stoßdämpfers in der Zugstufe;
- Fig. 6: die Kolbeneinheit des Stoßdämpfers nach Fig. 3b;
- Fig. 7: den Querschnitt A-A aus Fig. 6;
- Fig. 8: eine Prinzipskizze der fächerartigen Dämpfungskanäle;
- Fig. 9: einen vergrößerten Querschnitt durch die Kolbeneinheit;
- Fig. 10: eine erste schematische Darstellung einer Dämpferkennlinie für den Stoßdämpfer nach Fig. 3b;
- Fig. 11a: eine schematische Darstellung der hydraulischen Grundkennlinie des Stoßdämpfers nach Fig. 3a bzw. 3b und zwei verschiedene Dämpferkennlinien;
- Fig. 11b: eine schematische Darstellung einer weiteren Dämpferkennlinie; und
- Fig. 12: den zeitlichen Verlauf des Federwegs, der Kolbengeschwindigkeit, der Dämpfungskraft und der angelegten Stromstärke des Stoßdämpfers nach Fig. 3b bei einem Sprung.

Mit Bezug auf die beiliegenden Figuren wird im Folgenden ein Ausführungsbeispiel eines mit einer Fahrwerksteuerung 300 und mit Stoßdämpfern 100 ausgerüsteten Fahrrads 200 erläutert.

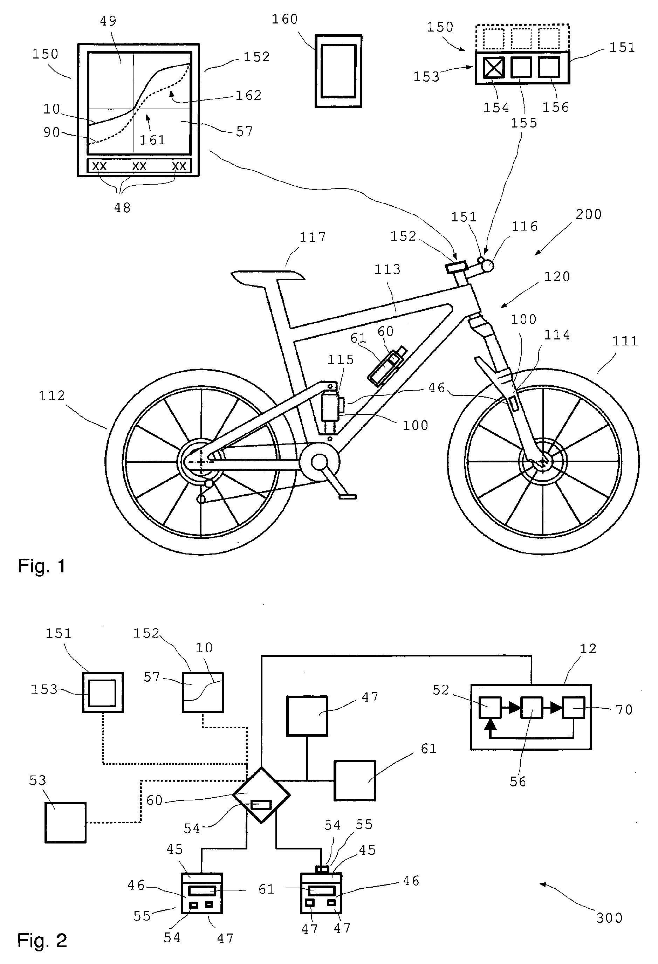

Fig. 1 zeigt eine schematische Darstellung eines Fahrrades 200, welches hier als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung dient zur Wahl des Übersetzungsverhältnisses. Weiterhin weist das Fahrrad 200 eine Lenkeinrichtung 116 mit einem Lenker auf. Weiterhin ist ein Sattel 117 vorgesehen.

Das Vorderrad 111 verfügt über einen als Federgabel 114 ausgeführten Stoßdämpfer 100 und an dem Hinterrad 112 ist ein als Hinterraddämpfer 115 ausgeführter Stoßdämpfer 100 vorgesehen.

Eine zentrale Steuereinrichtung 60 ist hier zusammen mit einer Batterieeinheit 61 in einem trinkflaschenartigen Behälter vorgesehen und an dem Unterrohr angeordnet, wo sonst eine Trinkflasche angeordnet ist, kann aber auch im Rahmen vorgesehen werden. Die zentrale Steuereinrichtung 60 kann auch an dem Lenker 116 angeordnet werden.

Die zentrale Steuereinrichtung 60 dient als Fahrwerksteuerung 200 und steuert hier sowohl die Federgabel 114 als auch den Hinterradstoßdämpfer 115 jeweils separat und hier insbesondere synchron. Die Steuerung der Stoßdämpfer 100 und weiterer Fahrradkomponenten kann in Abhängigkeit verschiedenster Parameter erfolgen und erfolgt auch anhand von sensorischen Daten. Gegebenenfalls können auch die Feder- und/oder Dämpfungseigenschaften der Sattelstütze eingestellt werden. Es ist möglich, dass mit der zentralen Steuereinrichtung 60 auch die Schaltung zum Einstellen verschiedener Übersetzungen gesteuert werden kann.

Zusätzlich weist hier jeder Stoßdämpfer 100 wenigstens eine Steuereinrichtung 46 an einer austauschbar vorgesehenen Elektronikeinheit auf. Die Elektronikeinheiten können jeweils separate Batterieeinheiten aufweisen. Bevorzugt ist aber eine Energieversorgung durch die zentrale Batterieeinheit 61 oder die Unterstützung oder der Betrieb durch einen Dynamo oder dgl.

Die Fahrwerksteuerung 200 und die zentrale Steuereinrichtung 60 werden über Bedieneinrichtungen 150 bedient. Es sind zwei Bedieneinrichtungen 150 vorgesehen, nämlich eine Betätigungseinrichtung 151 und eine Einstelleinrichtung 152. Die Betätigungseinrichtung 151 weist mechanische Eingabeeinheiten 153 an den seitlichen Enden oder in der Nähe der seitlichen Enden des Lenkers 116 auf. Die Einstelleinrichtung 152 kann als Fahrradcomputer ausgeführt sein und ebenfalls am Lenker 116 positioniert werden. Möglich ist es aber auch, dass ein Smartphone 160, oder ein Tablett oder dergleichen als Einstelleinrichtung 152 eingesetzt wird und beispielsweise in der Tasche oder in dem Rucksack des Benutzers aufbewahrt wird, wenn keine Veränderung der Einstellungen vorgenommen wird.

Die Betätigungseinrichtung 151 umfasst hier drei mechanische Eingabeeinheiten als Bedienelemente 154, 155, 156 zur Bedienung des Stoßdämpfers 100. Es ist möglich, dass für die Federgabel 114 eine Betätigungseinrichtung 151 an einem Ende des Lenkers 116 angeordnet ist und das an dem anderen Ende des Lenkers eine entsprechende weitere Betätigungseinrichtung 151 für den Hinterradstoßdämpfer 115 vorgesehen ist. Möglich ist es auch, dass beide Stoßdämpfer mit einer Betätigungseinrichtung 151 synchron gesteuert werden. Möglich ist es auch, dass an einem seitlichen Ende des Lenkers 116 eine Betätigungseinrichtung mit beispielsweise sechs unterschiedlichen Bedienelementen zur Einstellung beider Stoßdämpfer 100 angeordnet ist.

Die Betätigungseinrichtung 151 ist erheblich robuster und widerstandsfähiger ausgeführt als die Bedieneinrichtung 152 und wird hier fest an dem Lenker 116 anmontiert. Die einzelnen als Druckschalter oder Taster ausgeführten Bedienelemente 154 bis 156 weisen jeweils Schutz gemäß IP54 oder besser IP67 nach DIN EN 60529 auf. Es liegt ein Schutz gegen Stöße von mindestens IK06 gemäß DIN EN 622622 vor. Damit sind die Bedienelemente 154 bis 156 im normalen Betrieb ausreichend geschützt, sodass eine Beschädigung der Bedienelemente im Betrieb auch bei normalen Stößen oder dergleichen nicht erfolgt. Außerdem sorgen die robusten Bedienelemente 154 bis 156 für eine zuverlässige Bedienung auch bei Downhillfahrten oder dergleichen.

Die Einstelleinrichtung 152 hingegen, die beispielsweise am Lenker angeklipst wird oder die in der Tasche oder in einem Rucksack des Benutzers verbleibt, bietet erheblich mehr und/oder übersichtlichere Einstellmöglichkeiten und kann dazu eingesetzt werden, eine angezeigte Dämpferkennlinie 10 in wenigstens zwei oder mehr Bereichen 161, 162 etc. zu verändern, um die gewünschten Dämpfereigenschaften einzustellen. Die Einstelleinrichtung 150 weist ein Display bzw. eine Anzeige 49 auf und kann auch Daten 48 ausgeben, die beispielweise die Dämpfereinstellungen betreffen oder aber Daten über die aktuelle Fahrgeschwindigkeit etc. enthalten. Neben oder anstelle der Veränderung der Dämpfung kann über die Einstelleinrichtungen 150 und 152 auch wenigstens eine Federeigenschaft oder die Charakteristik der Federung verändert werden. Dabei kann insbesondere die Federhärte beim Ein- und oder Ausfedern beeinflusst werden. Außerdem kann gegebenenfalls die Ruhelage eingestellt werden. Beispielsweise kann ein Absenken der Federgabel 114 bei (steilen) Bergfahrten vorgenommen werden, wodurch der Neigungswinkel des Fahrrads 200 verringert wird.

Das Display 49 ist insbesondere als grafische Bedieneinheit oder Touchscreen 57 ausgeführt, sodass der Benutzer beispielsweise eine dargestellte Dämpferkennlinie 10 mit den Fingern berühren und durch Ziehen ändern kann. Dadurch kann aus der durchgezogen dargestellten Dämpferkennlinie 10 durch Berühren an einem oder mehreren Punkten 170 bis 175 die dargestellte Dämpferkennlinie 90 erzeugt werden, die dann ab sofort für die Fahrzeugsteuerung 300 eingesetzt wird. Die Veränderung der Dämpferkennlinien 10, 90 ist auch während der Fahrt möglich. Hier wird nicht nur die Dämpfung verändert, sondern es kann auch gleichzeitig oder aber auch nur die Federung verändert werden.

Die Einstelleinrichtung 152 kann auch als Fahrradcomputer dienen und Informationen über die aktuelle Geschwindigkeit, sowie über die Durchschnittsgeschwindigkeit und/oder die Tage-, Tour, Runden- und Gesamtkilometer anzeigen. Möglich ist auch die Anzeige der aktuellen Position, der momentanen Höhe der gefahrenen Strecke sowie des Streckenprofils und auch eine mögliche Reichweite unter den aktuellen Dämpfungsbedingungen.

Figur 2 zeigt eine schematische Darstellung der Fahrwerksteuerung 300 und der Kommunikationsverbindungen einiger beteiligter Komponenten. Die zentrale Steuereinrichtung 60 kann drahtgebunden oder drahtlos mit den einzelnen Komponenten verbunden sein. Beispielsweise kann die Steuereinrichtung 60 über WLAN, Bluetooth, ANT+, GPRS, UMTS, LTE oder sonstige Übertragungsstandards mit den anderen Komponenten verbunden sein. Gegebenenfalls kann die Steuereinrichtung 60 über die gepunktet dargestellte Verbindung mit dem Internet 53 drahtlos verbunden sein.

Die Steuereinrichtung 60 ist mit der Batterieeinheit 61 verbunden. Weiterhin kann die Steuereinrichtung 60 mit einer Sensoreinrichtung 47 oder mit mehreren Sensoren verbunden sein. Wenigstens zeitweise sind die Bedieneinrichtungen 150, nämlich die Betätigungseinrichtung 151 und die Einstelleinrichtung 152 drahtgebunden oder drahtlos mit der Steuereinrichtung 60 gekoppelt. Die Betätigungseinrichtung 151 ist vorzugsweise drahtgebunden an die Steuereinrichtung gekoppelt, kann aber auch drahtlos angebunden sein und über eine separate Batterie wie eine Knopfzelle oder dergleichen verfügen.

Die robust aufgebaute Betätigungseinrichtung 151 verfügt über wenigstens eine mechanische Eingabeeinheit 153 in Form eines Schalters oder dergleichen, um darüber einen Umstellbefehl an die Steuereinrichtung 60 zur Umschaltung wenigstens einer Dämpfer- und/oder Federeigenschaft auszugeben. Das kann beispielsweise die Aktivierung eines Lockouts oder die Aktivierung einer Wippunterdrückung oder die Verstellung der Dämpferhärte und/oder der Federhärte sein. Vorzugsweise ist für jede dieser Eigenschaften ein separater Bedienknopf oder dergleichen vorgesehen. Es ist aber auch möglich, dass eine einzelne mechanische Eingabeeinheit 153 zum Umschalten der einzelnen Möglichkeiten verwendet wird. Die mechanische Eingabeeinheit 153 oder eine mechanische Eingabeeinheit kann zur Veränderung der Federungseigenschaften dienen. Beispielsweise kann die Federgabel abgesenkt und der Hinterraddämpfer entsprechend angepasst werden.

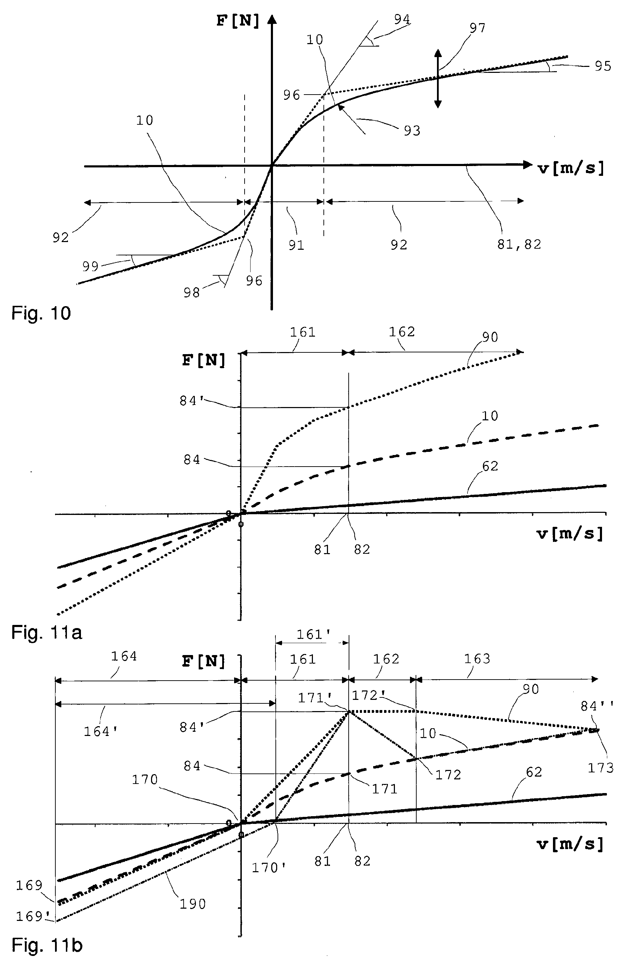

Die Einstelleinrichtung 152 verfügt hier über eine grafische Bedieneinheit wie einen berührungsempfindlichen Bildschirm und kann unter anderen auf dem Display 49 die aktuelle Dämpferkennlinie 10 darstellen. Durch beispielsweise Berühren und Ziehen der Dämpferkennlinie an einzelnen Punkten 169, 170, 171, 172 und 173 kann die Dämpferkennlinie 10 grundsätzlich beliebig seitlich oder in der Höhe verschoben werden (vgl. Fig. 11b). Vorzugsweise werden die einzelnen Punkte 169, 170, 171, 172 oder 173 etc. linear verbunden. Möglich ist auch eine dynamische Verbindung der einzelnen Punkte über Splines, sodass eine abgerundete Dämpferkennlinie vorliegt.

Die Steuereinrichtung 60 ist über Netzwerkschnittstellen 54 oder Funknetzschnittstellen 55 mit Steuereinrichtungen 46 der Stoßdämpfer 100 am Vorderrad und am Hinterrad verbunden. Die möglicherweise an jedem Stoßdämpfer 100 vorgesehene Steuereinrichtung 46 sorgt für die lokale Steuerung und kann jeweils eine Batterie aufweisen oder aber mit der zentralen Batterieeinheit 61 verbunden sein. Bevorzugt ist es, dass die Steuerung beider Stoßdämpfer über die Steuereinrichtung 60 erfolgt.

Vorzugsweise ist jedem Stoßdämpfer 100 wenigstens eine Sensoreinrichtung 47 zugeordnet, um Relativbewegungen zwischen den Komponenten 101 und 102 zu erfassen und insbesondere eine Relativposition der Komponenten 101 und 102 relativ zueinander zu bestimmen. Die Sensoreinrichtung 47 kann als Wegsensor ausgebildet sein oder einen solchen umfassen. Anhand der in der Speichereinrichtung 45 abgelegten Dämpferkennlinie 10 des Stoßdämpfers 100 wird nach Ermittlung eines Kennwerts für die Relativgeschwindigkeit die zugehörige Dämpfungskraft und eine passende Federkraft eingestellt. Eine passende Federkraft kann über das Gewicht des Fahrers ermittelt werden. Beispielsweise kann durch automatische Ermittlung der SAG-Position nach dem Aufsetzen eines Fahrers das Gewicht des Fahrers abgeleitet werden. Aus dem Einfederungsweg beim Aufsetzen des Fahrers auf das Fahrrad kann auf einen geeigneten Luftdruck in der Fluidfeder bzw. Gasfeder geschlossen werden, der dann automatisch sofort oder im Laufe des Betriebs eingestellt oder angenähert wird.

In Figur 2 ist der Steuerkreislauf 12 schematisch dargestellt, der in der Speichereinrichtung 45 abgelegt ist und in der Steuereinrichtung 60 hinterlegt oder einprogrammiert ist. Der Steuerkreislauf 12 wird im Betrieb periodisch und insbesondere kontinuierlich periodisch durchgeführt. Im Schritt 52 wird mit den Sensoren 47 eine aktuelle Relativbewegung bzw. Relativgeschwindigkeit der ersten Komponente 101 zur zweiten Komponente 102 erfasst. Aus den Werten des Sensors 47 oder der Sensoren wird im Schritt 52 ein Kennwert abgeleitet, der repräsentativ für die aktuelle Relativgeschwindigkeit ist. Im Schritt 56 wird dann anschließend aus dem aktuellen bzw. ermittelten Kennwert 81 (vgl. Figuren 10, 11) unter Berücksichtigung der vorbestimmten oder ausgewählten Dämpferkennlinie die zugehörige einzustellende Dämpfungskraft 84 abgeleitet. Daraus wird ein Maß für die aktuell einzustellende Feldstärke bzw. Stromstärke abgeleitet, mit welcher die einzustellende Dämpfungskraft wenigstens näherungsweise erreicht wird. Das Maß kann die Feldstärke selbst sein oder aber z. B. die Stromstärke angeben, mit welcher die einzustellende Dämpfungskraft wenigstens etwa erreicht wird.

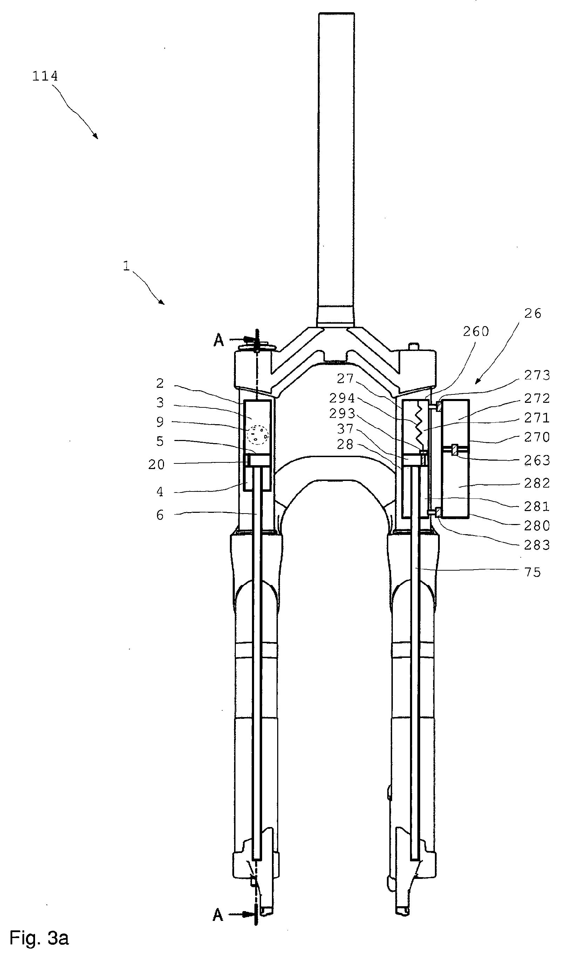

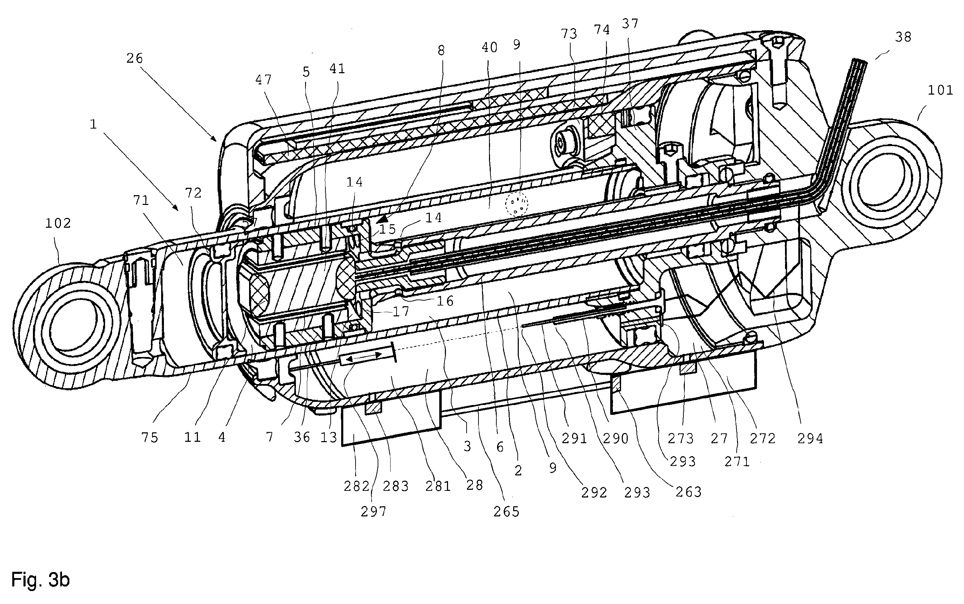

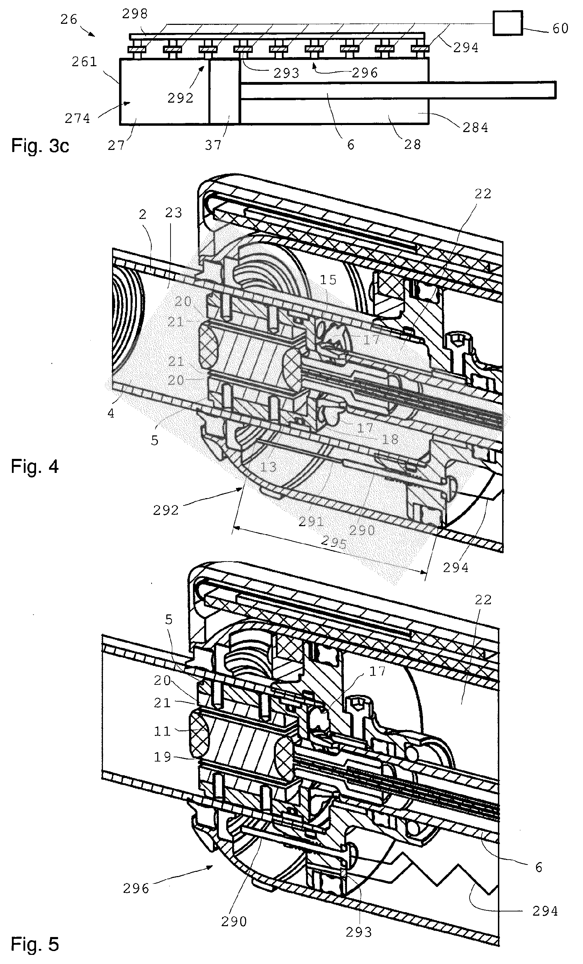

Im darauf folgenden Schritt 70 wird die aktuell einzustellende Feldstärke erzeugt oder die entsprechende Stromstärke an die elektrische Spuleneinrichtung 11 als Felderzeugungseinrichtung angelegt, sodass innerhalb eines einzelnen Zyklus bzw. einer Zeitperiode des Steuerkreislaufes 12 die Dämpfungskraft erzeugt wird, die bei der gewählten oder vorbestimmten Dämpferkennlinie zu der aktuellen Relativgeschwindigkeit der ersten Komponente zu der zweiten Komponente vorgesehen ist. Anschließend startet der nächste Zyklus und es wird wieder Schritt 52 durchgeführt. In jedem Zyklus oder in bestimmten zeitlichen Abständen oder bei bestimmten Ereignissen wird die Position oder die Federkraft der Federeinrichtung 26 überprüft. Dazu wird bei der Fluidfeder 260 (vgl. Fig. 3) die Stärke der Federkraft der Positivkammer 270 und die Stärke der Federkraft der Negativkammer 280 überprüft oder ermittelt. Wird eine härtere Fluidfeder 261 gewünscht, kann beispielsweise die zweite Positivkammer 272 abgeschaltet werden, sodass die Fluidfeder 260 einen steileren Verlauf der Federkraft erhält. Oder es wird das Volumen der Negativkammer 280 verändert oder es wird eine Position 292 der Ausgleichseinrichtung 290 verändert.

Fig. 3a zeigt in einer stark schematischen Ansicht eine Federgabel 114, die für das Vorderrad 111 Anwendung findet und Fig. 3b zeigt den Hinterraddämpfer 115, die im Folgenden gemeinsam beschrieben werden.

Die Federgabel 114 weist einen Stoßdämpfer 100 auf. Der Stoßdämpfer 100 umfasst eine Dämpfereinrichtung 1 in einem Bein der Federgabel und eine Federeinrichtung in dem anderen Bein der Federgabel. In anderen Ausgestaltungen können die Dämpfereinrichtung 1 und die Federeinrichtung 26 auch in einem Bein gemeinsam angeordnet sein.

Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu federn und zu dämpfen.

Die Dämpfereinrichtung 1 umfasst eine erste Dämpferkammer 3 und eine zweite Dämpferkammer 4 in einem gemeinsamen Dämpfergehäuse 2. Die beiden Dämpferkammer 3 und 4 sind voneinander durch den Dämpferkolben bzw. Dämpfungskolben 5 getrennt, in oder an dem ein magnetorheologisches Dämpfungsventil 8 einen Dämpfungskanal 20 aufweist, durch den das magnetorheologische Dämpfungsfluid 9 (MRF) strömt. Während das Dämpfergehäuse 2 an dem oberen Teil der Federgabel 114 und somit dem Rahmen 113 befestigt ist, ist der Dämpferkolben 5 über die Kolbenstange 6 mit dem unteren Ausfallende verbunden.

In dem anderen Federbein der Federgabel ist hier die Federeinrichtung 26 angeordnet, die hier eine als Fluidfeder 261 ausgebildete Federeinheit 260 umfasst. Die Federeinrichtung weist ein Gehäuse auf, in welchem der Federungskolben 37 eine Positivkammer 270 von einer Negativkammer 280 trennt. Die Positivkammer 270 bildet eine Positivfeder und die Negativkammer 280 bildet eine Negativfeder, deren Federkraft in der Ruheposition meist geringer ist, aber bei der die Federkraft der der Positivfeder entgegengesetzt ist. Dadurch wird ein gutes Ansprechverhalten erreicht, da auch bei kleinen Stößen die Fluidfeder 261 reagiert. Die Fluidfeder 261 ist mit einem Fluid und hier mit Gas und vorzugsweise Luft gefüllt.

Die Positivfeder umfasst hier zwei Teilkammern 271 und 272, die durch ein Steuerventil 273 voneinander bedarfsweise getrennt oder miteinander verbunden werden können.

Die Negativfeder umfasst hier zwei Teilkammern 281 und 282, die durch ein Steuerventil 283 voneinander bedarfsweise getrennt oder miteinander verbunden werden können.

Die Teilkammer 272 der Positivkammer 270 und die Teilkammer 282 der Negativkammer 280 können über das Steuerventil 263 miteinander verbunden werden. Dadurch wird es mit den Steuerventilen 263, 273 und 283 möglich, an jeder beliebigen Federposition einen Druckausgleich zwischen der Positivkammer und der Negativkammer vorzunehmen, wodurch die jeweilige Charakteristik der Fluidfeder 261 geändert wird. Die Steuerventile 263, 273 und 283 dienen dabei als Aktoren, welche durch die Steuereinrichtung 60 gesteuert betätigt werden. Dadurch kann die Ruhelage frei eingestellt werden und auch ein Absenken einer Federgabel beispielsweise bei Bergfahrten erreicht werden. Bei einem Hinterradstoßdämpfer kann ein gegebenenfalls vorhandenes Zusatzvolumen in einer Teilkammer weggeschaltet werden und somit die Federung am Hinterrad für eine Bergauffahrt härter eingestellt werden. Es ist möglich, dass nur eines der Steuerventile 263, 273 und 283 vorgesehen ist. Beispielsweise kann nur das Steuerventil 273 (oder 283) vorgesehen sein, sodass durch Öffnen bzw. Schließen des Steuerventils 273 (bzw. 283) das Volumen der Positivkammer 270 (Negativkammer 280) und somit die Federcharakteristik der Federeinheit 260 verändert wird.

Es ist auch möglich, dass die Federgabel 114 nur ein Steuerventil 293 im Federungskolben 37 aufweist, welches über ein Kabel bzw. eine Steuerleitung 294 mit der Steuereinrichtung 60 verbunden ist. Durch das Öffnen des Steuerventils 293 kann ein Gastaustausch an jeder beliebigen axialen Position des Federungskolbens 37 ermöglicht werden. Ein Druckausgleich an einer geeigneten Stelle verändert die Ruhelage und führt z. B. zu einem Absenken oder zu einer Überführung in die Normallage, wenn die Federgabel abgesenkt war.

Durch geeignete Steuerung der Steuerventile kann auch das Druckniveau in der Positiv- und/oder Negativkammer beeinflusst werden.

Fig. 3b zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu dämpfen.

In dem Dämpfergehäuse 2 ist eine Dämpfungskolbeneinheit 40 vorgesehen, die einen Dämpfungskolben 5 mit einem Dämpfungsventil 8 und eine damit verbundene Kolbenstange 6 umfasst. In dem Dämpfungskolben 5 ist das magnetorheologische Dämpfungsventil 8 vorgesehen, welches hier eine Felderzeugungseinrichtung 11 und insbesondere eine elektrische Spule umfasst, um eine entsprechende Feldstärke zu erzeugen. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle 20, 21 (vgl. Fig. 4). Dadurch wird eine effektive Beeinflussung des sich in den Dämpfungskanälen 20 und 21 befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich hier ein magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle 20 und 21, die am anderen Ende in den Sammelraum 13 bzw. in die Sammelräume 13 münden. Dort sammelt sich nach dem Austritt aus den Dämpfungskanälen 20, 21 das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, das der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 28 der Federeinrichtung 26 umgeben. Dadurch wird ein besonders kompakter Aufbau ermöglicht.

Der Stoßdämpfer 100 umfasst eine Ausgleichseinrichtung 290, welche einen Druckausgleich zwischen der Positivkammer 270 und der Negativkammer 280 ermöglicht. Die Position des Druckausgleichs ist einstellbar. Dazu kann die Ausgleichseinrichtung 290 z. B. einen teleskopierbaren Ausgleichsstößel 291 aufweisen, der mehr oder weniger aus dem Federungskolben 37 ausfahrbar ist. Dadurch erreicht der ausfahrbare Ausgleichsstößel 291 früher (oder später) einen Anschlag am Ende der Negativkammer 280. Die Ausgleichseinrichtung 290 kann über ein elektrisches Kabel 294 mit der Steuerungseinrichtung 60 verbunden sein. Wenn der Ausgleichsstößel 291 anstößt, öffnet er eine Fluidöffnung daran, sodass ein Gasausgleich und somit ein Druckausgleich zwischen der Positivkammer 270 und der Negativkammer 280 erfolgt.

Beim Ausfedern schließt die Ausgleichseinrichtung 290 wieder automatisch. Je nach Position des Ausgleichs werden unterschiedliche Druckverhältnisse an der Fluidfeder 261 eingestellt, die das Fahrwerk entsprechend beeinflussen. Möglich ist es auch, dass am Ende der Negativkammer 280 ein verstellbarer oder verfahrbarer Anschlag für einen feststehenden Ausgleichsstößel 291 vorgesehen ist, um eine Variation der Federcharakteristik zu erzielen. Alternativ oder zusätzlich dazu kann ein längenverstellbarer Anschlag 297 vorgesehen sein, gegen den der Ausgleichsstößel 291 an einer einstellbaren und veränderbaren Position 292 bzw. 296 anschlägt. Wenn der Ausgleichsstößel 291 anschlägt, öffnet der Ausgleichsstößel 291 das Steuerventil 293 bzw. bildet eine Strömungsöffnung, durch welche ein Druckausgleich zwischen Positiv- und Negativkammer erfolgen kann. Fig. 3b zeigt eine Stellung 292 mit ausgefahrenem Ausgleichsstößel 291. Der Ausgleichsstößel 291 kann auch eingefahren werden, sodass sich eine andere Position 296 ergibt, bei der die Ausgleichseinrichtung 290 öffnet.

Weiterhin kann auch ein elektrisch steuerbares und z. B. über das elektrische Kabel 294 mit Energie versorgtes Ausgleichsventil 293 vorgesehen sein, um an geeigneten Positionen einen teilweisen oder vollständigen Druckausgleich zwischen der Positivkammer 270 und der Negativkammer 280 durchzuführen.

Der Ausgleichsstößel 291 ist vorzugsweise mit einer Feder beaufschlagt.

Weiterhin kann die Positivkammer 270 aus mehreren Teilkammern 271, 272 bestehen. Zu der Grundkammer als Teilkammer 271 kann bei Bedarf oder auf Wunsch die Teilkammer 272 zugeschaltet werden, um die Federhärte zu verändern und insbesondere zu verringern. Umgekehrt kann auch die Teilkammer 272 abgeschaltet und von der Teilkammer 271 getrennt werden, wenn die Federhärte verändert und insbesondere erhöht werden soll.

Analog dazu kann kann die Negativkammer 280 aus mehreren Teilkammern 281, 282 bestehen. Zu der ersten Teilkammer 281 kann bei Bedarf oder auf Wunsch die zweite Teilkammer 282 zugeschaltet werden. Entsprechend kann auch die Teilkammer 282 abgeschaltet und von der Teilkammer 281 getrennt werden. In einer weiteren Ausgestaltung umfasst die Positivkammer 270 Teilkammern 271 und 272 und die Negativkammer 280 Teilkammern 281 und 282. Die Ausgleichseinrichtung 290 umfasst in dieser Ausgestaltung Steuerventile 273, 283 und 263 und eine Verbindungsleitung 265, welche die Teilkammern 272 und 282 bedarfsweise miteinander verbindet. Werden die drei Steuerventile 273, 283 und 263 geöffnet, so findet ein Druckausgleich zwischen der Positivkammer 270 und der Negativkammer 280 statt. Die Position 292 des Druckausgleichs ist dabei beliebig wählbar und unabhängig von einem Ausgleichsstößel 291. Deshalb muss bei einer solchen Ausgestaltung weder ein Ausgleichsstößel 291, noch ein Steuerventil 293 im Kolben 37, noch ein einstellbarer Anschlag 297 vorgesehen sein.

Die Zu- und Abschaltung der Teilkammern kann in allen Fällen auch positionsabhängig beim Ein- oder Ausfedern erfolgen.

Der Federungskolben 37 ist am Ende des Dämpfergehäuses 2 vorgesehen. Daran angeordnet ist ein Halter 73, der einen Magneten 74 hält. Der Magnet 74 ist Teil eines Sensors 47. Der Sensor 47 umfasst ein Magnetpotentiometer, welches ein Signal erfasst, welches für die Position des Magneten 74 und damit des Federungskolbens 37 repräsentativ ist. Eine solches Potentiometer 47 erlaubt nicht nur die Bestimmung eines relativen Ortes, sondern erlaubt hier auch die absolute Feststellung des Ein- bzw. Ausfederungsstandes des Stoßdämpfers 100. Möglich ist auch der Einsatz eines Ultraschallsensors, um einen Abstand zu erfassen.

Fig. 3c zeigt eine stark schematische Darstellung einer Federeinrichtung 26 eines Hinterraddämpfers 115 und insbesondere der Federgabel 114 aus Fig. 3a. Der Stoßdämpfer 100 weist eine als Fluidfeder 261 ausgeführte Federeinheit 260 auf, die eine Positivkammer 27 und eine Negativkammer 28 umfasst. Die Positivkammer 27 und die Negativkammer 28 sind in einem Gehäuse mit einem zylindrischen Innenraum vorgesehen und werden durch den Federungskolben 37 voneinander getrennt. Eine Kolbenstange 75 führt nach außen. An die Positivkammer 27 und an die Negativkammer 28 ist jeweils wenigstens eine hier extern angeordnete Ausgleichsleitung 298 angeschlossen. Hier sind mehrere Steuerventile 293 an unterschiedlichen axialen Positionen 292, 296 etc. des Federungskolbens 37 vorgesehen. Die Steuerventile 293 sind über Kabel bzw. Steuerleitungen 294 mit der Steuereinrichtung 60 verbunden. Nach Öffnung von zwei Steuerventilen 293 und Verbindung der Positivkammer 27 und Negativkammer 28 findet ein Fluidaustausch zwischen den beiden Kammern 27 und 28 statt. Je nachdem an welcher axialen Position ein Steuerventil 293 geöffnet und somit eine Verbindung zwischen Positivkammer 27 und Negativkammer 28 hergestellt wird, wird eine entsprechende Ruhelage des Stoßdämpfers 100 eingestellt. Das kann z. B. genutzt werden, um eine (oder mehrere) definierte Ruhelagen oder Absenkpositionen für unterschiedliche Gegebenheiten zur Verfügung zu stellen.

Fig. 4 und 5 zeigen partiell vergrößerte Details der Darstellung gemäß Fig. 3b, wobei in Fig. 4 der Druckstufenfall und in Fig. 5 der Zugstufenfall dargestellt ist.

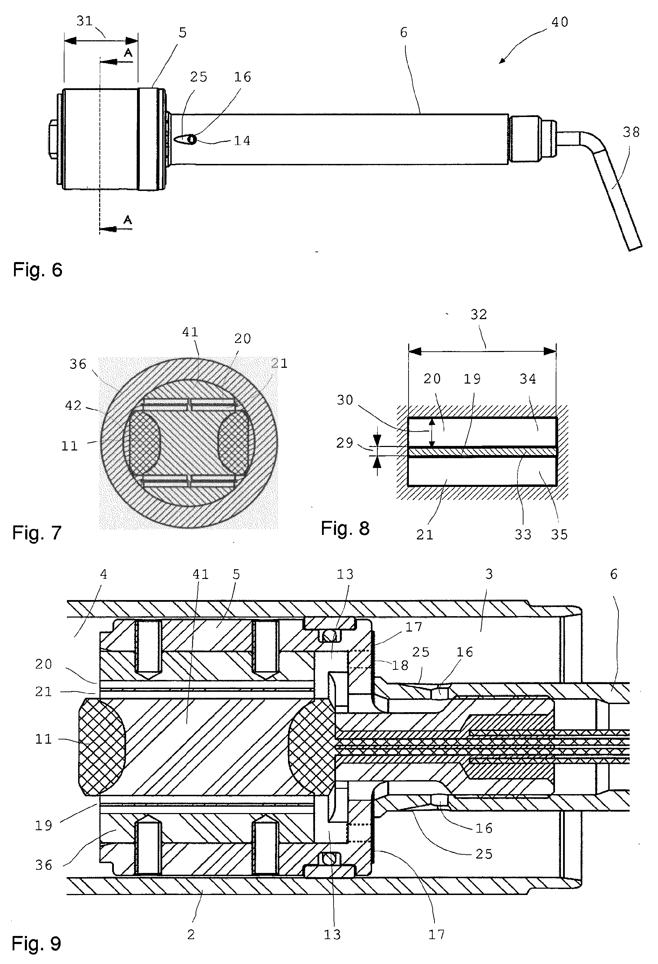

In dem in Fig. 4 dargestellten Druckstufenfall, also beim Einfedern, tritt aus der zweiten Dämpferkammer 4 das magnetorheologische Fluid 9 durch die Dämpfungskanäle 20, 21 in den Dämpfungskolben 5 ein. Der Durchflusswiderstand durch die Dämpfungskanäle 20, 21 hängt von dem Magnetfeld der als elektrischer Spule ausgeführten Felderzeugungseinrichtung 11 ab. Nach dem Verlassen der Dämpfungskanäle 20, 21 sammelt sich das magnetorheologische Fluid in den beiden Sammelräumen 13 (vgl. Fig. 9) und tritt anschließend durch die im Druckstufenfall durchlässigen Strömungsöffnungen 15 mit den Einwegventilen 17 hindurch. In Fig. 4 ist die Ausgleichseinrichtung 290 in der Position 291 dargestellt, in der die Länge 295 der Ausgleichseinrichtung 290 größer ist als in der Darstellung nach Fig. 5, in welcher der teleskopierbare Ausgleichsstößel vollständig eingefahren ist.

In dem in Fig. 5 dargestellten Zugstufenfall strömt das magnetorheologische Fluid von der einen Seite 22, der Seite der Kolbenstange 6, auf den Dämpfungskolben 5 zu. Die Einwegventile 17 an den Strömungsöffnungen 15 schließen automatisch, sodass nur noch die als Durchgangsöffnungen 16 ausgeführten Strömungsöffnungen 14 in der Kolbenstange 6 übrig bleiben, um das magnetorheologische Fluid in den Dämpfungskolben 5 hineinzubringen. Nachdem das magnetorheologische Fluid 9 durch die Durchgangsöffnung 16 in dem Sammelraum 13 bzw. in die Sammelräume 13 eingetreten ist, werden alle fächerartigen Dämpfungskanäle 20, 21 gleichmäßig durch das magnetorheologische Fluid durchströmt, bis das magnetorheologische Fluid an der anderen Strömungsseite 23 aus dem Dämpfungskolben 5 austritt. Klar erkennbar ist in Fig. 5 auch, dass der Dämpfungskolben 5 eine elektrische Spule als Felderzeugungseinrichtung 11, einen Kern 41 aus gut magnetisch leitendem Material und einen Ringleiter 36 umfasst. Weiterhin kann ein Isoliermaterial 42 vorgesehen sein.

Durch den Sammelraum 13 wird eine effektive Reihenschaltung der insbesondere als Shim-Ventile ausgeführten Einwegventile 17 mit den Dämpfungskanälen 20, 21 ermöglicht. Durch den Sammelraum 13 wird eine insbesondere unzulässig hohe Belastung der Fächerwandungen 19 durch unterschiedliche Drücke in den Dämpferkanälen 20, 21 vermieden. Dabei können Betriebsdrücke von 30 bar, 50 bar und mehr auftreten, die bei unterschiedlicher Belastung auf beiden Seiten einer Fächerwandung 19 zur Zerstörung der dünnen Fächerwandung 19 führen können.

Fig. 6 zeigt eine Seitenansicht der Dämpfungskolbeneinheit 40 mit dem Dämpfungskolben 5 und der Kolbenstange 6, aus der am Ende das Kabel 38 hervorragt. Die Länge 31 der Dämpfungskanäle 20, 21 ist beispielhaft angezogen. Klar erkennbar ist in dieser Darstellung die als Durchgangsöffnung 16 ausgebildete Strömungsöffnung 14 mit dem sich daran anschließenden schräg zulaufenden Einlauf 25, der für eine selbsttätig zunehmende Endlagendämpfung sorgt. Federt der Stoßdämpfer 100 fast vollständig aus, so schiebt sich der Federungskolben 37 zunächst über die Strömungsöffnung 16 und anschließend über den Einlauf 25, sodass der Durchflussquerschnitt immer weiter abnimmt und somit die Dämpfungskraft automatisch erhöht wird.

Fig. 7 zeigt den Querschnitt A-A aus Fig. 6. Der Kern 41 ist von der als Spule ausgeführten Felderzeugungseinrichtung 11 umgeben. In dem Kern sind Dämpfungskanäle 20 und 21 angeordnet. Radial umgeben werden der Kern und die Spule durch Ringleiter 36.

Fig. 8 zeigt eine vergrößerte Darstellung der Dämpfungskanäle 20, 21, die in dem Kern 41 vorgesehen sind. Die fächerartigen Dämpfungskanäle 20, 21 werden durch eine Fächerwandung 19 voneinander getrennt. Dabei beträgt eine Wandstärke 29 der Fächerwandung 19 weniger als eine Höhe 30 eines Dämpfungskanals 20 bzw. 21. Auch die Querschnittsfläche 33 der Fächerwandung 19 ist erheblich kleiner als die Querschnittsfläche 34 bzw. 35 der Dämpfungskanäle 20 bzw. 21. Im dargestellten Beispiel liegt die Wandstärke 29 der Fächerwandung 19 bei etwa 0,3 bis 0,6 mm. Die lichte Höhe 30 des Dämpfungskanals 20 bzw. 21 ist mit 0,5 mm bis 0,9 mm größer.

Typische Werte für Dämpfungskanäle 20, 21 eines Hinterraddämpfers 115 sind, ohne jedoch darauf beschränkt zu sein, Kanallängen 31 zwischen etwa 10 und 30 mm, Kanalbreiten zwischen etwa 5 und 20 mm und Kanalhöhen zwischen etwa 0,2 und 1,5mm. Dabei können bis zu zehn Dämpfungskanäle 20, 21 vorhanden sein, die wiederum in einer oder mehreren Gruppen zusammengefasst sein können. Innerhalb einer solchen Gruppe sind die Dämpfungskanäle 20, 21 durch Fächerwandungen 19 voneinander getrennt, die typische Wandstärken zwischen 0,2 und 1 mm haben.

Der freie Strömungsquerschnitt als Summe aller Dämpfungskanäle 20, 21 ist stark abhängig von der Kanalform, dem verwendeten Fluid, der Kolbenfläche und dem gewünschten Kraftbereich. Typischerweise liegt der freie Strömungsquerschnitt im Bereich zwischen 10 und 200 Quadratmillimeter.

Fig. 10 zeigt eine Dämpferkennlinie 10 des Stoßdämpfers 100 nach Fig. 3a oder Fig. 3b mit dem Dämpfungsventil 8 in einem Kraft-Geschwindigkeits-Diagramm. Der Low-Speed-Bereich 91 und der High-Speed-Bereich 92 sind über eine sanfte Abrundung mit einem Radius 93 verbunden. Die Dämpferkennlinie 10 ist hier unsymmetrisch aufgebaut. Die Dämpferkennlinie 10 zeigt zwar grundsätzlich ähnliche Verläufe für die Druck- und die Zugstufe, aber die Steigung ist in der Zugstufe steiler vorgegeben als in der Druckstufe.

Die Dämpferkennlinie 10 wird jederzeit in Echtzeit elektrisch unter Berücksichtigung der hydraulischen Grunddämpfung eingestellt, sodass bei jedem Stoß bzw. Ereignis oder jeder Störung 85 noch während des Stoßes 85 oder der Störung selbst eine entsprechende Dämpfungskraft 84 eingestellt wird.

Die Steigung 94 der hier dargestellten Dämpferkennlinie 10 im Low-Speed-Bereich 91 kann sowohl für die Druckstufe als für die Zugstufe jeweils durch eine Gerade mit im Wesentlichen linearer Steigung 94 bzw. 98 gut angenähert werden. Die hier dargestellte Dämpferkennlinie 10 verläuft durch den Koordinatenursprung, sodass bei einer Relativgeschwindigkeit des Dämpferkolbens 5 von null auch keine Dämpfungskraft vorliegt. Das ermöglicht ein sehr weiches und angenehmes Ansprechverhalten.

Auch im High-Speed-Bereich 92 sind die Steigungen 95 bzw. 99 hier im Wesentlichen linear vorgegeben. Dazwischen kann sich jeweils ein gekrümmter Zwischenabschnitt 93 erstrecken, um Knickpunkte 96 zu vermeiden. Es kann auch ein linearer Zwischenabschnitt 93 oder es können mehrere lineare oder leicht gekrümmte Zwischenabschnitte 93 vorgesehen sein, um einen gekrümmten Verlauf anzunähern.

Eingezeichnet ist weiterhin ein Pfeil 97, der die Auswirkung eines unterschiedlich starken Magnetfeldes anzeigt. Mit einem stärkeren Magnetfeld verschiebt sich die Dämpferkennlinie nach oben, während sie sich bei einem schwächeren Magnetfeld nach unten verschiebt.

Punktiert eingezeichnet ist eine Dämpferkennlinie, bei der kein Zwischenabschnitt 93 vorgesehen ist, sodass sich an den Punkten 96 mehr oder weniger stark ausgeprägte Knickpunkte ergeben. Eine solche Dämpferkennlinie kann durch Ziehen der ursprünglichen Dämpferkennlinie an vorbestimmten oder auch frei wählbaren Punkten einfach eingestellt werden. In komfortablen Ausführungsformen kann das durch Berührung mit dem Finger oder Stift und Ziehen in die gewünschte Form erfolgen.

Die Steigungen 94 und 98 im Low-Speed-Bereich 91 und die Steigungen 95 und 99 in den High-Speed-Bereichen 92 sind wie auch die gesamte Dämpferkennlinie 10 änderbar und an die aktuellen Wünsche und Bedingungen automatisch oder manuell anpassbar. Dadurch kann bei Erkennung eines entsprechend veränderten Untergrundes eine andere Dämpferkennlinie automatisch gewählt werden, die eine weichere oder aber härtere Dämpfung vorgibt. Unabhängig von der gewählten Dämpferkennlinie wird jederzeit jeder Stoß in Echtzeit gedämpft.

Die Steigungen 95 und 99 im jeweiligen High-Speed-Bereich 92 werden zunächst vorgegeben und sind aber bei Bedarf jederzeit veränderbar. Die Stromversorgung für die Steuereinrichtung und die elektrische Spule als Felderzeugungseinrichtung 11 kann durch eine Batterie, einen Akku, einen Generator, Dynamo oder insbesondere auch einen Nabendynamo erfolgen.

Fig. 11a stellt die Grundkennlinie 62 und zwei unterschiedliche Dämpferkennlinien 10 und 90 dar. Aufgetragen ist jeweils die Dämpfungskraft über der Relativgeschwindigkeit der Komponenten 101 und 102 zueinander. Die Komponenten 101 und 102 können die beiden Enden eines Stoßdämpfers sein oder aber den Rahmen und das Rad repräsentieren.

Die Grundkennlinie 62 stellt die hydraulischen Eigenschaften des Stoßdämpfers 100 ohne Anlegen eines Magnetfeldes dar. Durch die Einwegventile 17 unterscheidet sich die Steigung der Grundkennlinie 62 in der Druckstufe und in der Zugstufe und ist in der Zugstufe steiler als in der Druckstufe.

Die Dämpferkennlinien 10 und 90 sind in Fig. 11a unsymmetrisch aufgebaut. Die Dämpferkennlinien 10 und 90 stellen die resultierenden Dämpfungskräfte über der Relativgeschwindigkeit dar und setzen sich jeweils aus der Dämpfungskraft der Grundkennlinie 62 und der magnetisch erzeugten Dämpfungskraft zusammen. Das bedeutet, dass jeweils eine geringere Dämpfungskraft als die Dämpfungskraft der Grundkennlinie 62 bei einer bestimmten Ein- oder Ausfedergeschwindigkeit nicht einstellbar ist. Die Grundkennlinie 62 muss bei der Auslegung berücksichtigt werden. Eine geringere Dämpfung ist prinzipbedingt nicht möglich. Andererseits wird bei einer besonders geringen Differenz zwischen einer Dämpferkennlinie 10 und der Grundkennlinie 62 besonders wenig elektrische Energie benötigt, sodass eine gewisse Anpassung der Grundkennlinie 62 an die weichste vorgesehene Dämpferkennlinie sinnvoll ist. Die weichste vorgesehene Dämpferkennlinie kann z. B. die Dämpferkennlinie 10 sein.

Eine Grundkennlinie 62 mit brauchbaren" Eigenschaften stellt vernünftige Notlaufeigenschaften sicher, falls die Stromversorgung nicht mehr ausreichend Energie bereitstellen kann. Möglich und bevorzugt ist auch ein mechanisch einstellbares Notventil, um einstellbare Notlaufeigenschaften zur Verfügung zu stellen.

Die Steigung ist bei der dargestellten Dämpferkennlinie in der Druckstufe und der Zugstufe jeweils unterschiedlich. In der Zugstufe ist die Steigung 96 hier insgesamt etwa linear. Eine Unterscheidung zwischen Low-Speed-Bereich 91 und High-Speed-Bereich 92 findet in der Zugstufe hier praktisch nicht statt.

In der Druckstufe hingegen weisen der Low-Speed-Bereich 91 und der High-Speed-Bereich 92 bei beiden eingezeichneten Dämpferkennlinien 10 und 90 hier jeweils unterschiedliche Steigungen 94 bzw. 95 auf.

Der Sensor 47 wird durch die Steuereinrichtung 46 in kurzen äquidistanten Zeitabständen von z. B. 1 ms, 2 ms oder 5 ms periodisch abgefragt. Die Steuereinrichtung 46 berechnet aus den Signalen einen aktuellen Kennwert 81 für den charakteristischen Kennwert 82. Der charakteristische Kennwert 82 entspricht hier im Ausführungsbeispiel der Relativgeschwindigkeit 82 der Relativbewegung der ersten Komponente und der zweiten Komponente. Möglich ist es, dass die Steuereinrichtung 60 aus den Sensorsignalen eine Relativgeschwindigkeit 82 ermittelt, die als aktueller Kennwert 81 verwendet werden kann. Im einfachsten Falle ermittelt der Sensor 47 dazu direkt eine Relativgeschwindigkeit. In einem anderen einfachen Fall ermittelt der Sensor 47 oder die Steuereinrichtung 46 aus den Sensorsignalen eine Weg- oder Positionsänderung der Komponenten 101 und 102 zueinander. Wenn der Zeitabstand zweier Messungen bekannt ist, kann daraus eine Relativgeschwindigkeit 82 und somit ein aktuellen Kennwert 81 abgeleitet werden. Bei im Wesentlichen konstantem Zeitabstand zwischen zwei Messungen kann auch eine Positionsänderung bzw. Relativbewegung direkt als aktueller Kennwert 81 verwendet werden.

Möglich ist es auch, aus Werten von Beschleunigungssensoren oder aus einem Parameterset mehrerer unterschiedlicher Sensorwerte einen aktuellen Kennwert 81 zu ermitteln, der repräsentativ für die aktuelle Relativgeschwindigkeit 82 ist. Eine Ausführung sieht vor, die Daten von Beschleunigungssensoren und/oder Wegsensoren derart zu koppeln, dass einerseits auf schnelle Veränderungen durch Sprünge oder Unebenheiten der Fahrbahn schnell reagiert werden kann, und dass andererseits eine exakte Positions- und Geschwindigkeitsbestimmung bei langsameren Vorgängen erreicht wird.

Mit dem so ermittelten aktuellen Kennwert 81 wird mithilfe der in einer Speichereinrichtung abgelegten Dämpferkennlinie 10 oder z. B. 90 die dazugehörige Dämpfungskraft 84 bzw. 84' ermittelt. Das dazugehörige Magnetfeld und die zugehörige Stromstärke der Spule 11 werden abgeleitet und in Echtzeit eingestellt. Das bedeutet, dass ein Zyklus innerhalb 20 ms und in der Regel auch innerhalb von 10 ms abläuft. Die Messung kann häufiger erfolgen, z. B. in Zeitabständen von 5 ms oder sogar in Zeitabständen von 1 oder 2 ms oder noch schneller. Die Steuerungseinrichtung 60 verarbeitet die aufgenommenen Sensorsignale und erzeugt mit der Spule 11 ein Magnetfeld entsprechender Feldstärke, um die zu dem aktuellen Kennwert 81 zugehörige Dämpfungskraft zu erzeugen. Innerhalb der vorgesehenen Zykluszeit von z. B. 10 ms wirkt das Magnetfeld und stellt die gewünschte Dämpfungskraft 84 ein.

Wenn sich nach einer weiteren Messperiode die Relativgeschwindigkeit 82 geändert hat, wird ein dementsprechend anderes Magnetfeld erzeugt, sodass der Regelkreislauf aus Sensor 47, Steuereinrichtung 46 und Dämpfungsventil 8 als Aktor die gewünschte Reaktionszeit einhält und in Echtzeit das System anpasst.

In Figur 11b ist die Dämpferkennlinie 10 aus Figur 11a dargestellt. Weiterhin ist eine Dämpferkennlinie 90 dargestellt, die beispielsweise durch Ziehen an den Punkten 169, 170, 171, 172 und 173 bzw. durch Verändern der Kennlinie in einzelnen Bereichen 161, 162, 163 und 164 aus der Dämpferkennlinie 10 erzeugt wurde.

Figur 11b zeigt eine weitere Darstellung von Kennlinien. Beispielsweise könnte der Inhalt von Fig. 11b auf einem grafischen Display und einer berührungssensitiven Anzeige 57 angezeigt werden. Wird beispielsweise die Dämpferkennlinie 10 aus Fig. 11b an dem Punkt 171 erfasst und lokal zu dem Punkt 171' gezogen, so steigt die Kennlinie anschließend vom Nullpunkt an erheblich steiler an. Wird anschließend die Kennlinie von dem Punkt 172 zu dem Punkt 172' gezogen, so ergibt sich zwischen den Punkten 171' und 172' bei der neuen Kennlinie 90 ein linearer Verlauf, bei dem sich die Dämpfungskraft praktisch nicht ändert. Die Dämpferkennlinien 10 und 90 berühren sich wieder an dem Punkt 173. So ergibt sich als neue Dämpferkennlinie 90 der punktiert eingezeichnete Verlauf, in welchem die Dämpferkennlinie 90 in den Bereichen 161, 162 und 163 verändert wurde. Der Bereich 164 verbleibt unverändert. Dabei ist der Verlauf der Dämpferkennlinie 90 unabhängig von dem Verlauf der Dämpferkennlinie 10. Das bedeutet, dass der Verlauf der Dämpferkennlinie in den Bereichen 161, 162, 163 und 164 grundsätzlich nicht voneinander abhängt. So kann in dem Bereich 163 die Dämpfung geringer sein als in dem Bereich 162, sowie es eingezeichnet ist. Das ist mit herkömmlichen Stoßdämpfern so ohne Weiteres nicht erzielbar, da mit steigender Strömungsgeschwindigkeit der Durchflusswiderstand und somit die Dämpfungskraft steigt. Insbesondere ist auch der Verlauf der Dämpferkennlinie 90 in der Zugstufe unabhängig von dem Verlauf der Dämpferkennlinie 90 in der Druckstufe veränderbar.

Außerdem kann durch Veränderung der Federeigenschaften das Gesamtsystem beeinflusst werden, wodurch eine weitere manuelle oder automatische Anpassung möglich ist. Die Federgabel kann abgesenkt werden oder es wird der Druck und/oder die Federhärte in der Positivkammer und/oder Negativkammer erhöht oder verringert, je nach dem Gewicht des Fahrers und weiterer Bedingungen. Auch bei einer abgesenkten Federgabel können Dämpfungseigenschaften eingestellt werden, die identisch zu denen in nicht abgesenkter Stellung sind. Durch unterschiedliche Luftdrücke bedingte Unterschiede werden von der Steuereinrichtung automatisch berücksichtigt und ausgeglichen.

Hier kann bei dem Stoßdämpfer 100 bei einer hohen gemessenen Relativgeschwindigkeit 82 die Dämpfungskraft 84 sogar reduziert werden, indem das wirksame Magnetfeld an der elektrischen Spuleneinrichtung 11 beispielsweise durch Reduktion der Stromstärke verringert wird.

Die Dämpferkennlinie 90 kann gespeichert werden und/oder beliebig weiter verändert werden. Der Punkt 170 liegt am Nulldurchgang der Kraft und beschreibt hier auch den Nulldurchgang der Relativgeschwindigkeit.

Eine weitere Dämpferkennlinie 190 kann durch Ziehen oder Verändern der Punkte einfach eingestellt werden. Der Punkt 169 ist zum Punkt 169' verschoben. Auch der Nulldurchgang am Punkt 170 kann zum Punkt 170' zu positiven (oder auch negativen) Relativgeschwindigkeiten verschoben werden. Dadurch wird der Bereich 164' vergrößert und der Bereich 161' verkleinert. Dargestellt ist weiterhin, dass der Punkt 171' an Ort und Stelle belassen und der Punkt 172' wieder zum Punkt 172 zurückgezogen wurde. Wenn nun der Punkt 173 unverändert bleibt, so ergibt sich der dargestellte strichpunktierte Verlauf der Dämpferkennlinie 190. Das zeigt anschaulich, dass die Zugstufe und die Druckstufe unabhängig voneinander einstellbar sind. Messungen haben ergeben, dass bei Fahrraddämpfern Reaktions- und Zykluszeiten von 10 oder 20 ms vollkommen ausreichend sind, um die Dämpfung in Echtzeit einzustellen.

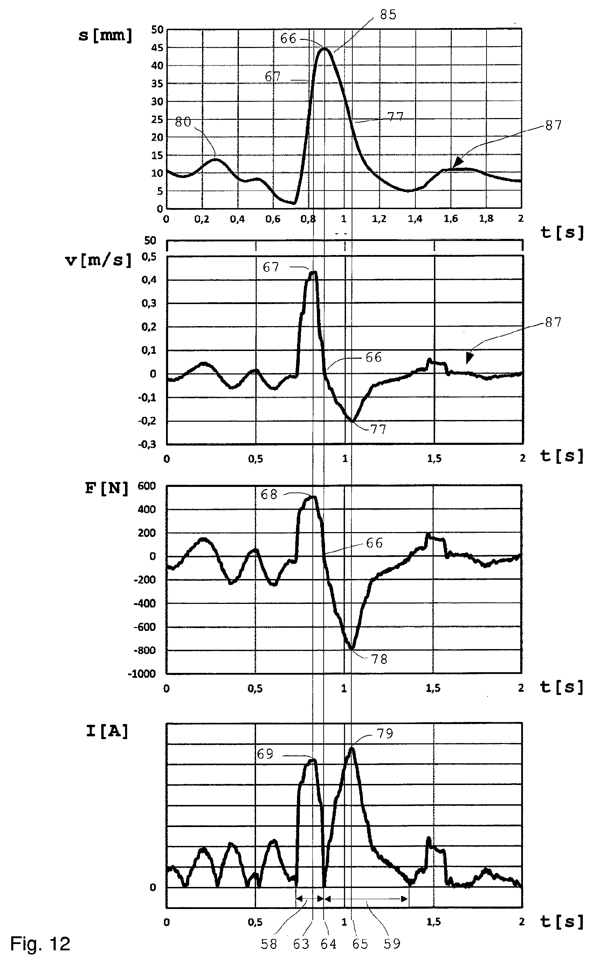

Das zeigen auch Daten eines tatsächlich gemessenen und gedämpften Sprunges, die in Fig. 12 abgebildet sind.

Fig. 12 zeigt übereinander in separaten Diagrammen über der Zeit die Relativbewegung 80 und die Mess- und Steuerdaten, die während eines mit einem Fahrrad ausgeführten Sprunges aufgenommen wurden. Die dabei verwendete Dämpferkennlinie entspricht z. B. der Dämpferkennlinie 10 aus Fig. 10. Würde hingegen eine Dämpferkennlinie 90 aus Fig. 11b eingesetzt, ergäben sich vollständig andere Verläufe bei gleichen Sprungausgangsbedingungen!

Hier ist in dem obersten Diagramm der Federweg in Millimetern über der Zeit in Sekunden abgebildet, wobei die Zeitskala insgesamt nur 2 Sekunden wiedergibt. Darunter sind in entsprechender Art und Weise die Relativgeschwindigkeit, die Dämpfungskraft und die Stromstärke über demselben Zeitintervall abgebildet. Benutzt ein anderer Fahrer das Fahrrad, kann durch Anpassung der Federeigenschaften und entsprechende Steuerung der Dämpfung ein exakt gleiches Verhalten erzeugt werden, unabhängig von dem Gewicht des Fahrers.

Zu Beginn des Sprungs befindet sich der Stoßdämpfer 100 innerhalb der SAG-Position und ist etwa 12 mm eingefedert. Während des Sprunges als Ereignis 85 federt der Stoßdämpfer 100 aus, sodass der Dämpfungskolben 5 bei etwa 0,75 Sekunden nahezu vollständig ausgefedert ist. Die Messungen werden in sehr geringen Zeitabständen 87 vorgenommen.

Nach dem Aufsetzen auf dem Boden beginnt das Hinterrad einzufedern und erreicht eine maximale Einfeder- und somit Relativgeschwindigkeit 67 in der Druckstufe, die bei etwa 0,8 Sekunden auftritt und hier Werte oberhalb von 0,4 m/s erreicht. Zur gleichen Zeit 63 wird auch die maximale Dämpfungskraft 68 von hier etwa 500 N mit dem Maximum der Stromstärke 69 in der Druckstufe erzeugt.

Sehr kurze Zeit später wird zum Zeitpunkt 64 die maximale Einfederung 66 erreicht, bei der die Relativgeschwindigkeit 67 null erreicht. Dementsprechend reduziert die Steuereinrichtung die Stromstärke auf null, sodass die Dämpfungskraft null beträgt.

Danach folgt die Zugstufendämpfung, während der Stoßdämpfer 100 wieder ausfedert. Gleichzeitig wird die Stromstärke entsprechend erhöht, um eine bei der eingestellten Dämpferkennlinie der Relativgeschwindigkeit 67 entsprechende Dämpfungskraft einzustellen.

Zum Zeitpunkt 65 ergibt sich die maximale Relativgeschwindigkeit 77 in der Zugstufe, die hier zu einer maximalen Stromstärke 79 zur Erzeugung einer maximalen Dämpfungskraft 78 von etwa 600 N führt.

Die Zeitdauer des Sprunges ergibt sich aus der Zeitdauer 58 der Druckstufe von ca. 0,2 Sekunden und der Zeitdauer 59 der Zugstufe von etwa 0,5 Sekunden zuzüglich der vorhergehenden Ausfederphase. Aus den genanten Zeiträumen ergibt sich direkt, dass eine Regelgeschwindigkeit von 250 ms nicht ausreichend ist. Um echtzeitfähig zu sein, muss das System innerhalb von wenigstens 50 ms und besser innerhalb von 20 ms reagieren, was hier gewährleistet wird.

Die Regelgeschwindigkeit inkl. Erfassung eines Sensorsignals, Ableitung eines Kennwerts, Einstellung der Stromstärke und Einstellung der Dämpfungskraft 84 beträgt hier weniger als 10 ms. Somit wird innerhalb des in Fig. 12 abgebildeten Zeitraumes der Steuerkreislauf 12 bzw. die Regelschleife etwa 200-mal durchlaufen.

Die grafisch einstellbare Dämpferkennlinie erlaubt es, die Dämpferkennlinie beliebig an die eigenen Bedürfnisse anzupassen oder einfach eine Dämpferkennlinie von Dritten zu übernehmen.

In allen Betriebsarten des Stoßdämpfers 100 wird vorzugsweise als Sensoreinrichtung 47 wenigstens ein Wegsensor eingesetzt. Die Sensoreinrichtung 47 wird z. B. vorzugsweise mit einer Frequenz von 2 kHz und einer Auflösung von 12 Bit ausgelesen. Theoretisch kann so bei einem Hub eines Hinterraddämpfers 115 von 50 mm alle 0,5 ms die Relativbewegung auf 12 µm genau bestimmt werden. Eine Federgabel 114 weist im Unterschied dazu z. B. einen Hub von 150 mm auf, wodurch sich bei gleichen Bedingungen eine Relativbewegung auf 36 µm genau bestimmt werden kann.

Die mit der Sensoreinrichtung 47 erfassten Daten durchlaufen vorzugsweise einen Tiefpass-Filter und werden zur Berechnung der Geschwindigkeit verwendet, wobei anhand der momentanen Geschwindigkeit, Richtung und der voreingestellten Dämpferkennlinie eine bestimmte Dämpfungskraft berechnet wird. Dieser Berechnungsvorgang wird z. B. mit 500 Hz wiederholt, sodass alle 2 ms eine neue Kraftvorgabe generiert wird. Aus der Dämpfungskraft wird über den bekannten Zusammenhang von Dämpfungskraft und dazu nötiger Feldstärke und wiederum dazu nötiger Stromstärke ein einzustellender Strom ermittelt. Insbesondere stellt ein eigener Stromregler anhand dieser Kraftvorgabe den entsprechenden Strom an der elektrischen Spuleneinrichtung am Stoßdämpfer ein, sodass die resultierende Dämpfungskraft ausreichend schnell nachgeführt wird und im Wesentlichen der Vorgabe entspricht.

Die Umwandlung einer analog gemessenen Relativbewegung in ein digitales Signal und die anschließende Berechnung der Stromvorgabe bzw. des einzustellenden Stroms benötigt kaum Ressourcen und ist mit einem Mikrocontroller nach dem Stand der Technik in wenigen Mikrosekunden möglich. Der Stromregler sorgt für ein ausreichend schnelles Ansprechen der elektrischen Spuleneinrichtung, sodass trotz Induktivität und Wirbelströmen ein Stromsprung von 0 auf 100% in wenigen Millisekunden möglich ist.

Vorteilhaft für das Ansprechverhalten des Stromreglers sind der Tiefpass-Filter und die Berechnung der Relativgeschwindigkeit, wobei hier ein Kompromiss aus schnellem Ansprechen und Filterwirkung gefunden werden muss. Die Filterparameter können auch dynamisch an die jeweilige Situation angepasst werden.

Bei entsprechend schneller Filterung wird im ungünstigsten Falle eine Relativbewegung bzw. eine Positionsänderung beim nächsten Reglertakt nach 2 ms erkannt und wird dann innerhalb von wenigen Mikrosekunden verarbeitet. Der Stromregler wird praktisch sofort daran arbeiten, die neue Stromvorgabe umzusetzen. Die Dämpfungskraft wirkt etwas verzögert nach der Stromvorgabe. Die Ansprechzeit des magnetorheologischen Fluids (MRF) beträgt kleiner als 1 ms. Die Steifigkeit des Systems spielt auch eine geringe Rolle. Abhängig vom konkreten Aufbau wird der neue Sollwert der Dämpfungskraft innerhalb von wenigen Millisekunden erreicht. Sprungantwortzeiten von weniger als 10ms sind mit dem System einfach machbar und wurden schon erfolgreich nachgewiesen. Je nach Anforderungen und verfügbaren Herstellkosten sind auch schnellere Komponenten einsetzbar, welche Sprungantwortzeiten im Bereich von einstelligen Millisekunden ermöglichen.

Die Regelung kann auch auf Fuzzy Logik aufgebaut und/oder lernfähig sein.

Vorzugsweise werden alle Dämpfer elektrisch zu einem Gesamtsystem verknüpft werden. Hierbei werden z. B. relevante Daten von einem ersten Dämpfer an einen zweiten Dämpfer in Echtzeit weitergegeben, wodurch sich dieser besser auf das Ereignis einstellen kann. Als Beispiel kann der Dämpfer in der Federgabel die Informationen an den Hinterraddämpfer weitergeben, wodurch sich dieser z. B. auf einen starken Schlag voreinstellen kann. Das Gesamtsystem wird so effektiver. Es ist auch/oder eine hydraulische Verknüpfung von zwei oder mehreren Dämpfern möglich (offenes oder geschlossenes hydraulisches System).

Die Dämpfereinrichtung kann zwei oder mehrere steuerbare Dämpfungsventile mit einer (oder mehreren) Felderzeugungseinrichtung umfassen. Diese können auch außerhalb der sich relativ zueinander beweglichen Komponenten angebracht sein. Möglich ist es auch, dass wenigstens ein Permanentmagnet vorgesehen, der ein statisches Magnetfeld erzeugt. Die Stärke des effektiv in dem Dämpfungsventil wirkenden Magnetfeldes kann dann durch das von der elektrischen Spule als Felderzeugungseinrichtung erzeugte Magnetfeld in Echtzeit moduliert werden.

Insgesamt stellt die Erfindung eine Fahrwerksteuerung und ein vorteilhaftes Zweirad zur Verfügung, wobei sowohl ein Hinterradstoßdämpfer als auch eine Federgabel gesteuert werden kann. Es wird auf einfache Art und Weise eine unterschiedliche Grunddämpfung in der Druck- und/oder Zugstufe ermöglicht. Die Unterschiedlichkeit hängt von der Orientierung der Einwegventile in den Strömungsöffnungen ab. Dadurch kann eine flexible und weitgehende Anpassung an unterschiedlichste Bedürfnisse gewährleistet werden. Die Steuerung erfolgt in Echtzeit, sodass auf alle auftretenden Ereignisse, Störungen, Stöße oder Hindernisse sofort und unmittelbar reagiert wird.

Die Bedienung ist flexibel und dennoch einfach. Es kann auch während einer Bergabfahrt oder während einer Fahrt durch das Gelände der Stoßdämpfer umgestellt werden, während eine Grob- und auch Feinjustage der Dämpfereinstellungen komfortabel möglich ist. Eine Absenkung der Federgabel und eine Einstellung der Ruheposition ist möglich. In Grenzen kann bei mehreren Teilkammern auch die Federhärte und das Druckniveau variiert werden.

**Bezugszeichenliste:**

| | | | |
|---|---|---|---|
| 1 | Dämpfereinrichtung | 42 | Isoliermaterial |
| 2 | Dämpfergehäuse | 45 | Speichereinrichtung |
| 3 | erste Dämpferkammer | 46 | Steuereinrichtung |
| 4 | zweite Dämpferkammer | 47 | Dämpfersensor, Sensor |
| 5 | Dämpfungskolben | 48 | Daten |
| 6 | Kolbenstange | 49 | Display, Anzeige |
| 7 | Dämpfungskanal, Strömungskanal | 52 | Schritt |
| | | 53 | Internet |
| 8 | Dämpfungsventil | 54 | Netzwerkschnittstelle |
| 9 | MRF | 55 | Funknetzschnittstelle |
| 10 | Dämpferkennlinie | 56 | Schritt |
| 11 | elektrische Spuleneinrichtung | 57 | Touchscreen, grafische Bedieneinheit |
| 12 | Steuerkreislauf | 58 | Zeitdauer Druckstufe |
| 13 | Sammelraum | 59 | Zeitdauer Zugstufe |
| 14, 15 | Strömungsöffnung | 60 | Steuereinrichtung |
| 16 | Durchgangsöffnung | 61 | Batterieeinheit |
| 17 | Einwegventil | 62 | Grundkennlinie |
| 18 | Ventilöffnung | 63-65 | Zeitpunkt |
| 19 | Fächerwandung | 66 | max. Einfederung |
| 20, 21 | Dämpfungskanal | 67 | Relativgeschwindigkeit |
| 22, 23 | Strömungsseite | 68 | max. Dämpfungskraft |
| 24 | Strömungsrichtung | 69 | max. Stromstärke |
| 25 | Einlauf | 70 | Schritt |
| 26 | Federeinrichtung | 71 | Ausgleichsraum |
| 27 | Positivkammer | 72 | Ausgleichskolben |
| 28 | Negativkammer | 73 | Halter |
| 29 | Wandstärke | 74 | Magnet |
| 30 | freie Erstreckung | 75 | Kolbenstange |
| 31 | Länge | 77 | max. Relativgeschwindigkeit |
| 32 | Breite | | |
| 33-35 | Querschnittsfläche | 78 | max. Dämpfungskraft |
| 36 | Ringleiter | 79 | max. Stromstärke |
| 37 | Federungskolben | 80 | Relativbewegung |
| 38 | Kabel | 81 | Kennwert |
| 40 | Dämpfungskolbeneinheit | 82 | Relativgeschwindigkeit |
| 41 | Kern | 84 | Dämpfungskraft |
| 85 | Ereignis | 271, 272 | Teilkammer |
| 87 | Zeitabstand | 273 | Steuerventil |
| 90 | Dämpferkennlinie | 274 | Fluidvolumen |
| 91 | Low-Speed-Bereich | 280 | Negativkammer |
| 92 | High-Speed-Bereich | 281, 282 | Teilkammer |
| 93 | Übergangsbereich | 283 | Steuerventil |
| 94, 95 | Steigung | 284 | Fluidvolumen |
| 96 | Knickpunkt | 290 | Ausgleichs¬einrichtung |
| 97 | Pfeil | 291 | Ausgleichsstößel |
| 98, 99 | Steigung | 292, | Position |
| 100 | Stoßdämpfer | 293 | Ausgleichsventil |
| 101 | Komponente | 294 | Kabel, Steuerleitung |
| 102 | Komponente | 295 | Länge |
| 111 | Rad, Vorderrad | 296 | Position |
| 112 | Rad, Hinterrad | 297 | Anschlag |
| 113 | Rahmen | 298 | Ausgleichsleitung |
| 114 | Federgabel | 300 | Fahrwerksteuerung |
| 115 | Hinterraddämpfer | | |
| 116 | Lenker | | |
| 117 | Sattel | | |
| 120 | Trageinrichtung | | |
| 150 | Bedieneinrichtung | | |
| 151 | Betätigungseinrichtung | | |
| 152 | Einstelleinrichtung | | |
| 153 | mechanische Eingabeeinheit | | |
| 154-156 | Bedienelement | | |
| 160 | Smartphone | | |
| 161-164 | Bereich | | |
| 169-173 | Punkt | | |
| 169'-173' | Punkt | | |
| 190 | Dämpferkennlinie | | |
| 200 | Zweirad | | |
| 260 | Federeinheit | | |
| 261 | Fluidfeder | | |
| 263 | Steuerventil | | |
| 265 | Leitung | | |
| 270 | Positivkammer | | |

## Patentansprüche

1. Fahrwerksteuerung (300) für ein wenigstens teilweise muskelbetriebenes Zweirad (200) und insbesondere Fahrrad (200) mit wenigstens einer Dämpfereinrichtung (1) und mit wenigstens einer Federeinrichtung (26) zur gefederten Dämpfung einer Relativbewegung zwischen einer ersten und einer zweiten Komponente (101, 102),
wobei die Federeinrichtung (26) wenigstens eine Federeinheit (260) mit einer Federeigenschaft umfasst, wobei die Federeinheit (260) wenigstens eine mit einem kompressiblen Fluid versehene Fluidfeder (261) umfasst, wobei die Fluidfeder (261) eine mit dem kompressiblen Fluid versehene Positivkammer (27) und eine mit dem kompressiblen Fluid versehene Negativkammer (28) aufweist und wobei die Positivkammer durch einen Federungskolben (37) begrenzt wird, und wobei die Dämpfereinrichtung (1) wenigstens eine Dämpfungseigenschaft aufweist,
wobei die Federeigenschaft der Federeinheit (261) über wenigstens einen elektrisch betätigbaren Aktor veränderbar ist, und wobei der Aktor über wenigstens eine elektrische Steuereinrichtung (60) steuerbar ist,
**dadurch gekennzeichnet,**
**dass** eine einstellbare Ausgleichseinrichtung (290) vorgesehen ist, mit welcher von der Steuereinrichtung (60) gesteuert an einer einstellbaren Position (291, 292) über die Ausgleichseinrichtung (290) ein Fluidaustausch zwischen der Negativkammer (280) und der Positivkammer (270) herstellbar ist.

2. Fahrwerksteuerung (300) nach Anspruch 1, wobei der elektrisch betätigbare Aktor wenigstens ein Steuerventil oder wenigstens eine Verstelleinrichtung umfasst.

3. Fahrwerksteuerung (300) nach dem vorhergehenden Anspruch, wobei an wenigstens zwei verschiedenen axialen Positionen (292, 296) des Federungskolbens (37) der Fluidaustausch zwischen der Negativkammer (280) und der Positivkammer (270) gesteuert herstellbar ist.

4. Fahrwerksteuerung (300) nach einem der drei vorhergehenden Ansprüche, wobei ein Fluidvolumen (270) der Positivkammer (27) und/oder wobei ein Fluidvolumen (280) der Negativkammer (28) elektrisch gesteuert veränderbar ist.

5. Fahrwerksteuerung (300) nach dem vorhergehenden Anspruch, wobei die Positivkammer (27) der Fluidfeder (261) wenigstens zwei Teilkammern (271, 272) aufweist, welche über wenigstens ein elektrisch steuerbares Steuerventil (273) miteinander verbindbar und voneinander trennbar sind und/oder wobei die Negativkammer (28) der Fluidfeder (261) wenigstens zwei Teilkammern (281, 282) aufweist, welche über wenigstens ein elektrisch steuerbares Steuerventil (283) miteinander verbindbar und voneinander trennbar sind.

6. Fahrwerksteuerung (300) nach einem der fünf vorhergehenden Ansprüche, wobei eine Länge (292) und/oder Position (292, 296) der Ausgleichseinrichtung (290) einstellbar ist.

7. Fahrwerksteuerung (300) nach einem der vorhergehenden Ansprüche, wobei die Ausgleichseinrichtung (290) wenigstens einen Ausgleichsstößel (291) umfasst.

8. Fahrwerksteuerung (300) nach einem der sechs vorhergehenden Ansprüche, wobei die Positivkammer (27) und die Negativkammer (28) über wenigstens eine Ausgleichsleitung (298) und mehrere an unterschiedlichen Positionen vorgesehene schaltbare Steuerventile (293) als elektrisch betätigbare Aktoren verbindbar ist.

9. Fahrwerksteuerung (300) nach einem der vorhergehenden Ansprüche, wobei eine Sensoreinrichtung (47) zur Ermittlung einer Relativposition der ersten und der zweiten Komponenten (101, 102) zueinander vorgesehen ist und wobei die Steuereinrichtung (60) dazu eingerichtet und ausgebildet ist, einen Fluiddruck des kompressiblen Fluids in der Positiv- und/oder Negativkammer durch gezieltes Öffnen und Schließen wenigstens eines Steuerventils (273, 283) einzustellen.

10. Fahrwerksteuerung (300) nach einem der vorhergehenden Ansprüche, wobei die Dämpfereinrichtung (1) mit wenigstens einem magnetorheologischen Fluid (9) versehenen ist und wenigstens ein magnetorheologisches Dämpfungsventil (8) umfasst, wobei das Dämpfungsventil (8) wenigstens eine mit der Steuereinrichtung (60) einstellbare Dämpfungseigenschaft aufweist, sodass sowohl die Dämpfungseigenschaft des Dämpfungsventils (8) als auch die Federeigenschaft der Federeinheit (261) über die elektrische Steuereinrichtung (60) veränderbar sind.

11. Fahrwerksteuerung (300) nach dem vorhergehenden Anspruch, wobei wenigstens eine Speichereinrichtung (45) vorgesehen ist, wobei mit der Steuereinrichtung (60) und der Speichereinrichtung (45) wenigstens eine Dämpferkennlinie (10, 90) definiert ist, welche einen Verlauf der Dämpfungskraft (84) über einer Relativgeschwindigkeit (82) zwischen der ersten und der zweiten Komponente (101, 102) definiert, wobei wenigstens eine Sensoreinrichtung (47) vorgesehen, und wobei die Steuereinrichtung (60) und die Sensoreinrichtung (47) dazu ausgebildet und eingerichtet sind, wenigstens einen aktuellen Kennwert (81) für die aktuelle Relativgeschwindigkeit (82) der ersten und der zweiten Komponente (101, 102) zueinander periodisch zu ermitteln, und wobei die Steuereinrichtung (60) dazu ausgebildet und eingerichtet ist, mit dem aktuellen Kennwert (81) aus der in der Speichereinrichtung (45) gespeicherten Dämpferkennlinie (10, 90) eine zugehörige aktuelle Einstellung für das steuerbare Dämpfungsventil (8) abzuleiten und an dem Dämpfungsventil (8) einzustellen, um eine aktuelle Dämpfungskraft (84) einzustellen, die sich aus der Dämpferkennlinie (10, 90) bei dem ermittelten aktuellen Kennwert (81) ergibt.

12. Fahrrad (200) mit einer Trageinrichtung (120) umfassend einen Rahmen (113), eine Lenkeinrichtung (116) und zwei Radaufnahmen an der Trageinrichtung (120), an welcher Trageinrichtung (120) zwei Räder (111, 112) aufgenommen sind, wobei wenigstens eine Fahrwerksteuerung (300) nach einem der vorhergehenden Ansprüche vorgesehen ist, um eine Relativbewegung (80) wenigstens eines der Räder (111, 112) und insbesondere beider Räder (111, 112) gegenüber der Trageinrichtung (120) zu federn und zu dämpfen.

13. Verfahren zum Steuern eines Fahrwerks eines wenigstens teilweise muskelbetriebenen Zweirads (200) mit wenigstens einer Dämpfereinrichtung (1)
und mit wenigstens einer Federeinrichtung (26) zur gefederten Dämpfung einer Relativbewegung zwischen einer ersten und einer zweiten Komponente (101, 102),
wobei die Federeinrichtung (26) wenigstens eine Federeinheit (260) mit einer Federeigenschaft umfasst, wobei die Federeinheit (260) über wenigstens eine mit einem kompressiblen Fluid versehene Fluidfeder (261) federt, wobei die Federung der Fluidfeder (261) über eine mit dem kompressiblen Fluid versehene Positivkammer (27) und eine mit dem kompressiblen Fluid versehene Negativkammer (28) erfolgt, und wobei die Dämpfereinrichtung (1) wenigstens ein Dämpfungseigenschaft aufweist,
die Federeigenschaft der Federeinheit (261) über wenigstens einen elektrisch betätigbaren Aktor verändert wird, und dass der Aktor über wenigstens eine elektrische Steuereinrichtung (60) gesteuert wird,
**dadurch gekennzeichnet,**
**dass** die Steuereinrichtung (60) mit einer einstellbaren Ausgleichseinrichtung (290) an einer einstellbaren Position (291, 292) über die Ausgleichseinrichtung (290) einen Fluidaustausch zwischen der Negativkammer (280) und der Positivkammer (270) gesteuert herstellt.

14. Verfahren nach dem vorhergehenden Anspruch, wobei die Federeinheit (260) eine Fluidfeder (261) mit einer Positivkammer (27) und/oder einer Negativkammer (28) umfasst, wobei zwei Teilkammern (271, 272) der Positivkammer (27) gesteuert miteinander verbunden und voneinander getrennt werden und/oder wobei zwei Teilkammern (281, 282) der Negativkammer (28) gesteuert miteinander verbunden und voneinander getrennt werden, um die Federkraft (263, 273) der Positivfeder (27) und der Negativfeder (28) einzustellen.

15. Verfahren nach dem vorhergehenden Anspruch, wobei die Teilkammern (271, 272) der Positivkammer (27) im eingefederten Zustand voneinander getrennt werden, um einen geänderte und vorzugsweise höhere Federkraft der Positivkammer (27) zur Verfügung zu stellen und wobei die Teilkammern (271, 272) der Positivkammer im ausgefederten Zustand voneinander getrennt werden, um eine geänderte und vorzugsweise geringere Federkraft der Positivkammer (27) zur Verfügung zu stellen
oder wobei die Teilkammern (281, 282) der Negativkammer (28) im ausgefederten Zustand voneinander getrennt werden, um eine geänderte und vorzugsweise höhere Federkraft der Negativkammer (28) zur Verfügung zu stellen und wobei die Teilkammern (281, 282) der Negativkammer (28) im eingefederten Zustand voneinander getrennt werden, um eine geänderte und vorzugsweise geringere Federkraft der Negativkammer (28) zur Verfügung zu stellen.

## Claims

1. Suspension control (300) for an at least partially muscle-powered two-wheeled vehicle (200) and in particular a bicycle (200) comprising at least one damper device (1) and at least one spring device (26) for sprung damping of a relative motion between a first and a second component (101, 102), the suspension device (26) comprising at least one spring unit (260) showing a spring characteristic, wherein the spring unit (260) comprises at least one fluid spring (261) provided with a compressible fluid, wherein the fluid spring (261) comprises a positive chamber (27) provided with the compressible fluid and a negative chamber (28) provided with the compressible fluid and wherein the positive chamber is defined by a suspension piston (37), and wherein the damper device (1) shows at least one damping characteristic, wherein the spring characteristic of the spring unit (260) can be varied by way of at least one electrically operated actuator, and wherein the actuator can be controlled by at least one electric control device (60), **characterized in that**
an adjustable equalizing device (290) is provided with which fluid exchange can be established between the negative chamber (280) and the positive chamber (270) by way of the equalizing device (290) in an adjustable position (291, 292), controlled by the control device (6.0).

2. The suspension control (300) according to claim 1 wherein the electrically operated actuator comprises at least one control valve or at least one adjustment device.

3. The suspension control (300) according to the preceding claim controlling the establishing of fluid exchange between the negative chamber (280) and the positive chamber (270) in at least two different axial positions (292, 296) of the suspension piston (37).

4. The suspension control (300) according to any of the three preceding claims wherein a fluid volume (270) of the positive chamber (27) and/or wherein a fluid volume (280) of the negative chamber (28) can be changed by way of electric control.

5. The suspension control (300) according to the preceding claim wherein the positive chamber (27) of the fluid spring (261) comprises at least two chamber sections (271, 272) which can be connected with, and separated from, one another by means of at least one electrically controlled control valve (273) and/or wherein the negative chamber (28) of the fluid spring (261) comprises at least two chamber sections (281, 282) which can be connected with, and separated from, one another by means of at least one electrically controlled control valve (283).

6. The suspension control (300) according to any of the five preceding claims wherein a length (292) and/or position (292, 296) of the equalizing device (290) is adjustable.

7. The suspension control (300) according to any of the preceding claims wherein the equalizing device (290) comprises at least one equalizing plunger (291).

8. The suspension control (300) according to any of the six preceding claims wherein the positive chamber (27) and the negative chamber (28) can be connected via at least one compensating line (298) and multiple switchable control valves (293) provided in different positions as electrically operated actuators.

9. The suspension control (300) according to any of the preceding claims wherein a sensor device (47) is provided for obtaining a relative position of the first versus the second component (101, 102) and wherein the control device (60) is set up and configured to adjust a fluid pressure of the compressible fluid in the positive chamber and/or the negative chamber by controlled opening and closing of at least one control valve (273, 283).

10. The suspension control (300) according to any of the preceding claims wherein the damper device (1) is provided with at least one magnetorheological fluid (9) and comprises at least one magnetorheological damping valve (8), wherein the damping valve (8) comprises at least one damping characteristic adjustable by the control device (60) so that both the damping characteristic of the damping valve (8) and the spring characteristic of the spring unit (260) can be changed via the electric control device (60).

11. The suspension control (300) according to the preceding claim wherein at least one memory device (45) is provided wherein the control device (60) and the memory device (45) define at least one characteristic damper curve (10, 90) which defines a curve of the damping force (84) over a relative speed (82) of the first versus the second component (101, 102), wherein at least one sensor device (47) is provided and wherein the control device (60) and the sensor device (47) are configured and set up for periodically obtaining at least one current characteristic value (81) of the current relative speed (82) of the first versus the second component (101, 102), and wherein the control device (60) is configured and set up to derive, by means of the current characteristic value (81), from the characteristic damper curve (10, 90) stored in the memory device (45), a pertaining current setting for the controllable damping valve (8) and to set the damping valve (8) accordingly so as to set a current damping force (84) ensuing from the characteristic damper curve (10, 90) based on the current characteristic value (81) obtained.

12. A bicycle (200) with a supporting structure (120) comprising a frame (113), a steering device (116) and two wheel accommodations at the supporting structure (120), which supporting structure (120) receives two wheels (111, 112) wherein at least one suspension control (300) according to any of the preceding claims is provided for springing and damping a relative motion (80) of at least one of the wheels (111, 112) and in particular of both of the wheels (111, 112) relative to the supporting structure (120).

13. A method for controlling a suspension of an at least partially muscle-powered two-wheeled vehicle (200) having at least one damper device (1) and at least one suspension device (26) for sprung damping of a relative motion between a first and a second component (101, 102), wherein the suspension device (26) comprises at least one spring unit (260) showing a spring characteristic, wherein the spring unit (260) is sprung by way of at least one fluid spring (261) provided with a compressible fluid, wherein the fluid spring (261) is sprung by way of a positive chamber (27) provided with the compressible fluid and a negative chamber (28) provided with the compressible fluid, and wherein the damper device (1) shows at least one damping characteristic, the spring characteristic of the spring unit (260) is variable by way of at least one electrically operated actuator, and that the actuator is controlled by at least one electric control device (60),
**characterized in that**
the control device (60) by way of an adjustable equalizing device (290) establishes in a controlled manner a fluid exchange between the negative chamber (280) and the positive chamber (270) in an adjustable position (291, 292) by way of the equalizing device (290).

14. The method according to the preceding claim wherein the spring unit (260) comprises a fluid spring (261) having a positive chamber (27) and/or a negative chamber (28) wherein two chamber sections (271, 272) of the positive chamber (27) are connected with, and separated from, one another by way of controlling and/or wherein two chamber sections (281, 282) of the negative chamber (28) are connected with, and separated from, one another by way of controlling for adjusting the spring force (263, 273) of the positive spring (27) and the negative spring (28).

15. The method according to the preceding claim wherein the chamber sections (271, 272) of the positive chamber (27) are separated from one another when in compressed state to provide a changed and preferably higher spring force of the positive chamber (27) and wherein the chamber sections (271, 272) of the positive chamber are separated from one another when in rebound state to provide a changed and preferably reduced spring force of the positive chamber (27), or wherein the chamber sections (281, 282) of the negative chamber (28) are separated from one another when in rebound state to provide a changed and preferably higher spring force of the negative chamber (28) and wherein the chamber sections (281, 282) of the negative chamber (28) are separated from one another when in compressed state to provide a changed and preferably reduced spring force of the negative chamber (28).

## Revendications

1. Commande de châssis (300) pour un deux roues (200) entraîné au moins partiellement par force musculaire et notamment pour un vélo (200) avec au moins un dispositif d'amortissement (1) et avec au moins un dispositif de suspension (26) pour amortir par suspension un mouvement relatif entre une première composante et une deuxième composante (101, 102),
le dispositif de suspension (26) comprenant au moins une unité de suspension (260) avec une caractéristique suspensive, l'unité de suspension (260) comprenant au moins un ressort à fluide (261) doté d'un fluide compressible, le ressort à fluide (261) présentant une chambre positive (27) dotée dudit fluide compressible et une chambre négative (28) dotée dudit fluide compressible, la chambre positive étant délimitée par un piston de suspension (37), et le dispositif d'amortissement (1) présentant au moins une caractéristique d'amortissement,
la caractéristique suspensive de l'unité de suspension (260) étant modifiable par le biais d'au moins un acteur actionnable électriquement, et ledit acteur étant commandable par au moins un dispositif de commande (60) électrique, **caractérisée en ce**
**qu'**un dispositif de compensation (290) réglable est prévu, permettant de générer, en une position réglable (291, 292), un échange de fluide entre la chambre négative (280) et la chambre positive (270), par le biais dudit dispositif de compensation (290), commandé à partir dudit dispositif de commande (60).

2. Commande de châssis (300) selon la revendication 1, l'acteur actionnable électriquement comprenant au moins une vanne de commande ou au moins un dispositif de réglage.

3. Commande de châssis (300) selon la revendication précédente, l'échange de fluide entre la chambre négative (280) et la chambre positive (270) pouvant être généré sur commande en au moins deux positions (292, 296) axiales différentes dudit piston de suspension (37).

4. Commande de châssis (300) selon l'une quelconque des trois revendications précédentes, un volume de fluide (270) de la chambre positive (27) et/ou un volume de fluide (280) de la chambre négative (28) étant modifiable par commande électrique.

5. Commande de châssis (300) selon la revendication précédente, la chambre positive (27) du ressort à fluide (261) présentant au moins deux chambres partielles (271, 272) reliables l'une à l'autre et déconnectables l'une de l'autre par le biais d'au moins une vanne de commande (273) à commande électrique, et/ou la chambre négative (28) du ressort à fluide (261) présentant au moins deux chambres partielles (281, 282) reliables l'une à l'autre et déconnectables l'une de l'autre par le biais d'une vanne de commande (283) à commande électrique.

6. Commande de châssis (300) selon l'une quelconque des cinq revendications précédentes, le dispositif de compensation (290) étant réglable dans une longueur (292) et/ou une position (292, 296).

7. Commande de châssis (300) selon au moins l'une quelconque des revendications précédentes, ledit dispositif de compensation (290) comprenant au moins un poussoir de compensation (291).

8. Commande de châssis (300) selon l'une quelconque des six revendications précédentes, la chambre positive (27) et la chambre négative (28) étant reliables par au moins une conduite de compensation (298) et plusieurs vannes de commande (293) commutables prévues à des positions différentes, en tant qu'acteurs actionnables électriquement.

9. Commande de châssis (300) selon l'une quelconque des revendications précédentes, un dispositif de capteur (47) étant prévu pour déterminer une position relative de la première et de la deuxième composante (101, 102) l'une par rapport à l'autre, et le dispositif de commande (60) étant destiné et disposé de sorte à régler une pression du fluide compressible dans la chambre positive et/ou dans la chambre négative en ouvrant et fermant de manière ciblée au moins une vanne de commande (273, 283).

10. Commande de châssis (300) selon l'une quelconque des revendications précédentes, le dispositif d'amortissement (1) étant doté d'au moins un fluide magnéto-rhéologique (9) et comprenant au moins une soupape d'amortissement (8) magnétorhéologique, ladite soupape d'amortissement (8) présentant au moins une caractéristique d'amortissement réglable au moyen du dispositif de commande (60), de telle sorte qu' aussi bien la caractéristique d'amortissement de la soupape d'amortissement (8) que la caractéristique suspensive de l'unité de suspension (260) sont modifiables par le biais du dispositif de commande (60).

11. Commande de châssis (300) selon la revendication précédente, au moins un moyen d'enregistrement (45) étant prévu, ledit dispositif de commande (60) et ledit moyen d'enregistrement (45) définissant au moins une courbe caractéristique d'amortissement (10, 90) qui définit une courbe de la force d'amortissement (84) par une vitesse relative (82) entre la première et la deuxième composante (101, 102), au moins un dispositif de capteur (47) étant prévu, et le dispositif de commande (60) ainsi que le dispositif de capteur (47) étant agencés et destinés pour déterminer de manière périodique au moins un paramètre (81) actuel de la vitesse relative actuelle (82) de la première et de la deuxième composante (101, 102) l'une par rapport à l'autre, et le dispositif de commande (60) étant agencé et destiné de telle sorte à dériver, à l'aide du paramètre (81) actuel, de la courbe caractéristique d'amortissement (10, 90) enregistrée dans le moyen d'enregistrement (45), un réglage actuel adéquat de la soupape d'amortissement (8) commandable et d'appliquer ledit réglage à la soupape d'amortissement (8) pour ajuster une force d'amortissement (84) actuelle qui résulte de la courbe caractéristique d'amortissement (10, 90) au paramètre (81) actuel déterminé.

12. Vélo (200) avec un dispositif support (120) comprenant un cadre (113), un dispositif de guidage (116) et deux logements de roue sur le dispositif support (120), deux roues (111, 112) étant montées sur ledit dispositif support (120), au moins une commande de châssis (300) étant prévue selon l'une quelconque des revendications précédentes pour servir de suspension et d'amortissement à un mouvement relatif (80) d'au moins une des roues (111, 112) et notamment des deux roues (111, 112) par rapport au dispositif support (120).

13. Procédé de commande d'un châssis d'un deux roues (200) entraîné au moins partiellement par force musculaire avec au moins un dispositif d'amortissement (1),
et avec au moins un dispositif de suspension (26) pour amortir par suspension un mouvement relatif entre une première et une deuxième composante (101, 102),
le dispositif de suspension (26) comprenant au moins une unité de suspension (260) avec une caractéristique suspensive, l'unité de suspension (260) étant mise en oeuvre par le biais d'au moins une chambre positive (27) dotée d'un fluide compressible et d'une chambre négative (28) dotée d'un fluide compressible, et le dispositif d'amortissement (1) présentant au moins une caractéristique d'amortissement,
la caractéristique suspensive de l'unité de suspension (260) étant modifiée par le biais d'au moins un acteur actionnable électriquement, et ledit acteur étant commandé par au moins un dispositif de commande (60) électrique,
**caractérisé en ce**
**que** ledit dispositif de commande (60) crée, à l'aide d'un dispositif de compensation (290) réglable, en une position réglable (291, 292), par le biais dudit dispositif de compensation (290), un échange de fluide entre la chambre négative (280) et la chambre positive (270).

14. Procédé selon la revendication précédente, l'unité de suspension (260) comprenant un ressort à fluide (261) avec une chambre positive (27) et/ou une chambre négative (28), deux chambres partielles (271, 272) de la chambre positive (27) étant reliées l'une à l'autre et déconnectées l'une de l'autre sur commande et/ou deux chambres partielles (281, 282) de la chambre négative (28) étant reliées l'une à l'autre et déconnectées l'une de l'autre sur commande pour régler la force de suspension (263, 273) du ressort positif (27) et du ressort négatif (28).

15. Procédé selon la revendication précédente, les chambres partielles (271, 272) de la chambre positive (27) étant déconnectées l'une de l'autre en état de suspension pour fournir une force de suspension de la chambre positive (27) modifiée et de préférence supérieure, et les chambres partielles (271, 272) de la chambre positive étant déconnectées l'une de l'autre en état hors suspension pour fournir une force de suspension de la chambre positive (27) modifiée et de préférence inférieure,
ou les chambres partielles (281, 282) de la chambre négative (28) étant déconnectées l'une de l'autre en état hors suspension pour fournir une force de suspension de la chambre négative (28) modifiée et de préférence supérieure, et les chambres partielles (281, 282) de la chambre négative (28) étant déconnectées l'une de l'autre en état de suspension pour fournir une force de suspension de la chambre négative modifiée et de préférence inférieure.
